# EUROPEAN PATENT APPLICATION

(11) **EP 4 815 336 A1**
(43) Date of publication of application: **30.09.2026**
(21) Application number: 24896502.2
(22) Date of filing: 26.11.2024
(51) Int. Cl.: H04B 10/032

(54) **VEHICLE-MOUNTED COMMUNICATION SYSTEM AND VEHICLE**

(30) Priority: 28.11.2023 CN 202311615493
(71) Applicant: BYD Company Limited, Shenzhen, Guangdong 518118 (CN)
(72) Inventor: ZHONG, Yilin, Shenzhen, Guangdong 518118 (CN); WANG, Wei, Shenzhen, Guangdong 518118 (CN); LUO, Chaowei, Shenzhen, Guangdong 518118 (CN); LI, Jilian, Shenzhen, Guangdong 518118 (CN); LIU, Dan, Shenzhen, Guangdong 518118 (CN)
(74) Representative: Taor, Simon Edward William
(86) International application number: PCT/CN2024/134395
(87) International publication number: WO 2025/113413

(57) **Abstract**

A vehicle-mounted communication system and a vehicle are provided. The vehicle-mounted communication system includes a vehicle-mounted controller, a first optoelectronic module, a second optoelectronic module, and a vehicle-mounted device. The vehicle-mounted controller and the vehicle-mounted device are connected through the first optoelectronic module and the second optoelectronic module. The vehicle-mounted controller is configured to send a first electrical signal to the first optoelectronic module. The first optoelectronic module is configured to perform protocol conversion and electro-optical conversion on the first electrical signal to obtain a first optical signal, and send the first optical signal to the second optoelectronic module. The second optoelectronic module is configured to perform optoelectronic conversion and protocol conversion on the first optical signal to obtain a second electrical signal, and send the second electrical signal to the vehicle-mounted device.

## Description

This application claims priority to Chinese patent application No. 202311615493.5 filed with the China National Intellectual Property Administration on November 28, 2023 and entitled "VEHICLE-MOUNTED COMMUNICATION SYSTEM AND VEHICLE", which is incorporated herein by reference in its entirety.

### TECHNICAL FIELD

This application relates to the field of communication technologies, and in particular, to a vehicle-mounted communication system and a vehicle.

### BACKGROUND

With the development of new technologies such as autonomous driving and smart transportation, and a growing demand for in-vehicle audio and video entertainment, performance of a vehicle-mounted communication system is increasingly valued by users. Existing vehicle-mounted communication systems generally implement communication based on vehicle-mounted Ethernet. However, as demands of the users for autonomous driving and intelligent cockpits of vehicles continue to escalate, a number of electronic control units (Electronic Control Unit, ECU) and demands for computing power both show an explosive growth, and a demand for real-time information transmission is also increasing, so that a communication rate of the existing vehicle-mounted communication system based on the vehicle-mounted Ethernet can no longer meet the user demands. Therefore, how to improve a communication rate of a vehicle-mounted communication system has become one of the technical problems to be urgently solved.

### SUMMARY

Embodiments of this application provide a vehicle-mounted communication system and a vehicle, which improve a communication rate of the vehicle-mounted communication system.

According to a first aspect, an embodiment of this application provides a vehicle-mounted communication system, where the vehicle-mounted communication system includes a vehicle-mounted controller, a first optoelectronic module, a second optoelectronic module, and a vehicle-mounted device, and the vehicle-mounted controller and the vehicle-mounted device are connected through the first optoelectronic module and the second optoelectronic module. The vehicle-mounted controller is configured to send a first electrical signal to the first optoelectronic module. The first optoelectronic module is configured to perform protocol conversion and electro-optical conversion on the first electrical signal to obtain a first optical signal, and send the first optical signal to the second optoelectronic module. The second optoelectronic module is configured to perform optoelectronic conversion and protocol conversion on the first optical signal to obtain a second electrical signal, and send the second electrical signal to the vehicle-mounted device.

In this embodiment of this application, a vehicle-mounted communication system implemented based on an optical transmission network is used in a vehicle, the optoelectronic modules enable an optical network to better adapt to communication between a vehicle-mounted controller and each vehicle-mounted device, which greatly improves a communication rate of the vehicle-mounted communication system, and increases a communication bandwidth of the vehicle-mounted communication system. In addition, the structure is simpler, so that applicability and practicability of the vehicle-mounted communication system are improved.

In conjunction with the first aspect, in some implementations, the first electrical signal carries target data, and the second electrical signal carries the target data.

In conjunction with the first aspect, in some implementations, the first optical signal is an optical signal that meets a second communication protocol and that is obtained by performing, by the first optoelectronic module, protocol conversion on the first electrical signal that meets a first communication protocol to obtain a third electrical signal that meets the second communication protocol and performing electro-optical conversion on the third electrical signal that meets the second communication protocol. The first communication protocol is a communication transmission protocol set between the vehicle-mounted controller and the vehicle-mounted device, and the second communication protocol is a communication transmission protocol set between the first optoelectronic module and the second optoelectronic module.

In conjunction with the first aspect, in some implementations, the second electrical signal is an electrical signal that meets the first communication protocol and that is obtained by performing, by the second optoelectronic module, optoelectronic conversion on the first optical signal to obtain a fourth electrical signal that meets the second communication protocol and performing protocol conversion on the fourth electrical signal that meets the second communication protocol.

In conjunction with the first aspect, in some implementations, at least one of the first optoelectronic module and the second optoelectronic module includes an optical module and a protocol conversion module electrically connected to the optical module. The protocol conversion module of the first optoelectronic module is configured to convert a received electrical signal that meets the first communication protocol into an electrical signal that meets the second communication protocol; and the optical module of the first optoelectronic module is configured to convert a received electrical signal that meets the second communication protocol into an optical signal that meets the second communication protocol, and output the optical signal. The optical module of the second optoelectronic module is configured to convert a received optical signal that meets the second communication protocol into an electrical signal that meets the second communication protocol, and output the electrical signal; and the protocol conversion module of the second optoelectronic module is configured to convert a received electrical signal that meets the second communication protocol into an electrical signal that meets the first communication protocol.

In conjunction with the first aspect, in some implementations, the vehicle-mounted communication system further includes a third optoelectronic module. The vehicle-mounted controller is configured to: when communication between the vehicle-mounted controller and the first optoelectronic module fails, electrically connect to the third optoelectronic module, and transmit the first electrical signal to the third optoelectronic module. The third optoelectronic module is configured to: when the communication between the vehicle-mounted controller and the first optoelectronic module fails, perform protocol conversion and optoelectronic conversion on the received first electrical signal to obtain the first optical signal, and send the first optical signal to the second optoelectronic module.

In conjunction with the first aspect, in some implementations, the vehicle-mounted communication system further includes a first controllable switch component. The first controllable switch component is configured to: when the communication between the vehicle-mounted controller and the first optoelectronic module fails, establish an electrical connection between the vehicle-mounted controller and the third optoelectronic module, so that the vehicle-mounted controller sends the first electrical signal to the third optoelectronic module. The first controllable switch component is further configured to: when the communication between the vehicle-mounted controller and the first optoelectronic module is normal, disconnect the electrical connection between the vehicle-mounted controller and the third optoelectronic module, so that the vehicle-mounted controller sends the first electrical signal to the first optoelectronic module.

In the foregoing implementation, a plurality of optoelectronic modules in the vehicle-mounted communication system may be connected to the second optoelectronic module, which can improve a communication rate and a communication bandwidth of the vehicle-mounted communication system, and serve as a standby circuit to ensure uninterrupted communication of the vehicle-mounted communication system and improve reliability of the vehicle-mounted communication system.

In conjunction with the first aspect, in some implementations, the vehicle-mounted communication system further includes a first optical path and a second optical path, and each of the first optical path and the second optical path is connected to the first optoelectronic module and the second optoelectronic module. The first optoelectronic module transmits the first optical signal through at least one of the first optical path or the second optical path.

In conjunction with the first aspect, in some implementations, when the first optical path fails, the first optoelectronic module is configured to transmit the first optical signal through the second optical path.

In conjunction with the first aspect, in some implementations, the first optoelectronic module includes a first optical module, a second optical module, and a first protocol conversion module. The second optoelectronic module includes a third optical module, a fourth optical module, and a second protocol conversion module. The first protocol conversion module is electrically connected to the first optical module and the second optical module separately; and the second protocol conversion module is electrically connected to the third optical module and the fourth optical module separately. The first optical path includes the first optical module and the third optical module. The second optical path includes the second optical module and the fourth optical module.

In conjunction with the first aspect, in some implementations, the vehicle-mounted communication system further includes a first optical switch disposed on the second optical path. The first optical switch is configured to turn on when the first optical path fails, so that the first optoelectronic module transmits the first optical signal through the second optical path; and the first optical switch is further configured to turn off when the first optical path is conductive, so that the first optoelectronic module transmits the first optical signal through the first optical path.

In the foregoing implementation, the first optoelectronic module and the second optoelectronic module may be connected through the first optical path, that is, a primary optical path, or may be connected through the second optical path, that is, a standby optical path. When determining that the primary optical path is interrupted, the vehicle-mounted controller 11 may control the first optical switch to turn on, so that the vehicle-mounted communication system switches to the standby optical path to transmit the first optical signal, thereby ensuring uninterrupted communication of the vehicle-mounted communication system, and improving reliability of the vehicle-mounted communication system.

In conjunction with the first aspect, in some implementations, the vehicle-mounted communication system further includes a second controllable switch component disposed between the first protocol conversion module and the second optical module. The second controllable switch component is configured to turn on when the first optical path fails, so that the first optoelectronic module transmits the first optical signal through the second optical path; and the second controllable switch component is further configured to turn off when the first optical path is conductive, so that the first optoelectronic module transmits the first optical signal through the first optical path.

In conjunction with the first aspect, in some implementations, the vehicle-mounted device includes a first vehicle-mounted device and a second vehicle-mounted device. The second optoelectronic module is electrically connected to the first vehicle-mounted device and the second vehicle-mounted device separately. The second optoelectronic module is further configured to send the second electrical signal to the first vehicle-mounted device and the second vehicle-mounted device separately.

In conjunction with the first aspect, in some implementations, the vehicle-mounted communication system further includes a first optical coupling splitter. The second optoelectronic module includes a first optoelectronic sub-module and a second optoelectronic sub-module. The vehicle-mounted device includes a third vehicle-mounted device and a fourth vehicle-mounted device. The first optical coupling splitter is optically coupled to the first optoelectronic module, the first optoelectronic sub-module, and the second optoelectronic sub-module separately, the first optoelectronic sub-module is electrically connected to the third vehicle-mounted device, and the second optoelectronic sub-module is electrically connected to the fourth vehicle-mounted device. The first optical coupling splitter is configured to receive the first optical signal, decompose the first optical signal into a second optical signal and a third optical signal, transmit the second optical signal to the first optoelectronic sub-module, and transmit the third optical signal to the second optoelectronic sub-module. The first optoelectronic sub-module is configured to perform optoelectronic conversion and protocol conversion on the second optical signal to obtain the second electrical signal, and send the second electrical signal to the third vehicle-mounted device. The second optoelectronic sub-module is configured to perform optoelectronic conversion and protocol conversion on the third optical signal to obtain the second electrical signal, and send the second electrical signal to the fourth vehicle-mounted device.

In the foregoing implementation, as the vehicle-mounted communication system employs the first optical coupling splitter, the number of vehicle harnesses can be significantly reduced, so that structural complexity of the vehicle-mounted communication system is reduced, a communication rate and communication bandwidth of the vehicle-mounted communication system are improved, and applicability and practicality of the vehicle-mounted communication system are improved.

In conjunction with the first aspect, in some implementations, the vehicle-mounted communication system further includes a third optical path and a fourth optical path, and each of the third optical path and the fourth optical path is connected to the first optoelectronic module and the first optical coupling splitter. The first optoelectronic module transmits the first optical signal through at least one of the third optical path or the fourth optical path.

In conjunction with the first aspect, in some implementations, when the third optical path fails, the first optoelectronic module transmits the first optical signal through the fourth optical path.

In conjunction with the first aspect, in some implementations, the first optoelectronic module includes a first optical module, a second optical module, and a first protocol conversion module. The first protocol conversion module is electrically connected to the first optical module and the second optical module separately. The third optical path includes the first optical module and the first optical coupling splitter. The fourth optical path includes the second optical module and the first optical coupling splitter.

In conjunction with the first aspect, in some implementations, the vehicle-mounted communication system further includes a second optical switch disposed on the fourth optical path. The second optical switch is configured to turn on when the third optical path fails, so that the first optoelectronic module transmits the first optical signal through the fourth optical path; and the second optical switch is further configured to turn off when the third optical path is conductive, so that the first optoelectronic module transmits the first optical signal through the third optical path.

In the foregoing implementation, the first optoelectronic module and the first optical coupling splitter may be connected through the third optical path, that is, a primary optical path, or may be connected through the fourth optical path, that is, a standby optical path. When determining that the primary optical path is interrupted, the vehicle-mounted controller may control the first optical switch to turn on, so that the vehicle-mounted communication system switches to the standby optical path to transmit the first optical signal, thereby ensuring uninterrupted communication of the vehicle-mounted communication system, and improving reliability of the vehicle-mounted communication system.

In conjunction with the first aspect, in some implementations, the vehicle-mounted communication system further includes a second optical coupling splitter. The second optoelectronic module further includes a third optoelectronic sub-module and a fourth optoelectronic sub-module. The vehicle-mounted device further includes a fifth vehicle-mounted device and a sixth vehicle-mounted device. The second optical coupling splitter is optically coupled to the first optical coupling splitter, the third optoelectronic sub-module, and the fourth optoelectronic sub-module, the third optoelectronic sub-module is electrically connected to the fifth vehicle-mounted device, and the fourth optoelectronic sub-module is electrically connected to the sixth vehicle-mounted device. The first optical coupling splitter is configured to receive the first optical signal, decompose the first optical signal into the second optical signal, the third optical signal, and a fourth optical signal, send the second optical signal to the first optoelectronic sub-module, send the third optical signal to the second optoelectronic sub-module, and send the fourth optical signal to the second optical coupling splitter. The second optical coupling splitter is configured to decompose the fourth optical signal into a fifth optical signal and a sixth optical signal, send the fifth optical signal to the third optoelectronic sub-module, and send the sixth optical signal to the fourth optoelectronic sub-module. The third optoelectronic sub-module is configured to perform optoelectronic conversion and protocol conversion on the fifth optical signal to obtain the second electrical signal, and send the second electrical signal to the fifth vehicle-mounted device. The fourth optoelectronic sub-module is configured to perform optoelectronic conversion and protocol conversion on the sixth optical signal to obtain the second electrical signal, and send the second electrical signal to the sixth vehicle-mounted device.

In conjunction with the first aspect, in some implementations, the vehicle-mounted system further includes a fifth optical path and a sixth optical path. Both the fifth optical path and the sixth optical path are connected to the first optical coupling splitter and the second optical coupling splitter. The first optical coupling splitter transmits the fourth optical signal through at least one of the fifth optical path or the sixth optical path.

In conjunction with the first aspect, in some implementations, when the fifth optical path fails, the first optical coupling splitter transmits the fourth optical signal through the sixth optical path.

In conjunction with the first aspect, in some implementations, the vehicle-mounted communication system further includes a third optical switch disposed on the sixth optical path. The third optical switch is configured to turn on when the fifth optical path fails, so that the first optical coupling splitter transmits the fourth optical signal through the sixth optical path; and the third optical switch is further configured to turn off when the fifth optical path is conductive, so that the first optical coupling splitter transmits the fourth optical signal through the fifth optical path.

In conjunction with the first aspect, in some implementations, the vehicle-mounted communication system further includes a third optical path and a seventh optical path. The third optical path is connected to the first optoelectronic module and the first optical coupling splitter, and the seventh optical path is connected to the first optoelectronic module and the second optical coupling splitter. The first optoelectronic module transmits the first optical signal through at least one of the third optical path or the seventh optical path.

In conjunction with the first aspect, in some implementations, when the third optical path fails, the first optoelectronic module transmits the first optical signal through the seventh optical path.

In conjunction with the first aspect, in some implementations, the vehicle-mounted communication system further includes a fourth optical switch disposed on the seventh optical path. The fourth optical switch is configured to turn on when the third optical path fails, so that the first optoelectronic module transmits the first optical signal through the seventh optical path; and the fourth optical switch is further configured to turn off when the third optical path is conductive, so that the first optoelectronic module transmits the first optical signal through the third optical path.

In conjunction with the first aspect, in some implementations, the vehicle-mounted communication system includes a third optical switch and a fourth optical switch; the first optoelectronic module and the first optical coupling splitter are connected through the third optical path, and the first optical coupling splitter and the second optical coupling splitter are connected through the fifth optical path and the sixth optical path; and the first optoelectronic module and the second optical coupling splitter are connected through the seventh optical path. The sixth optical path includes the third optical switch, and the seventh optical path includes the fourth optical switch. Upon determining that the third optical path and the fifth optical path are interrupted, the vehicle-mounted controller controls the third optical switch and the fourth optical switch to turn on, so that the first optoelectronic module and the second optoelectronic module transmit the first optical signal through the sixth optical path and the seventh optical path. Upon determining that the third optical path and the fifth optical path are conductive, the vehicle-mounted controller controls the third optical switch and the fourth optical switch to turn off, so that the first optoelectronic module and the second optoelectronic module transmit the first optical signal through the third optical path and the fifth optical path. Upon determining that the third optical path is interrupted, the vehicle-mounted controller controls the fourth optical switch to turn on, so that the first optoelectronic module and the second optoelectronic module transmit the first optical signal through the seventh optical path and the fifth optical path. Upon determining that the third optical path is conductive, the vehicle-mounted controller controls the fourth optical switch to turn off, so that the first optoelectronic module and the second optoelectronic module transmit the first optical signal through the third optical path and the fifth optical path. Upon determining that the fifth optical path is interrupted, the vehicle-mounted controller controls the third optical switch to turn on, so that the first optoelectronic module and the second optoelectronic module transmit the first optical signal through the third optical path and the sixth optical path. Upon determining that the fifth optical path is conductive, the vehicle-mounted controller controls the third optical switch to turn off, so that the first optoelectronic module and the second optoelectronic module transmit the first optical signal through the third optical path and the fifth optical path.

In the foregoing implementation, the first optoelectronic module and the second optoelectronic module may be connected through the primary optical path, or the standby optical path. When determining that the primary optical path is interrupted, the vehicle-mounted controller may switch to the standby optical path to transmit the first optical signal, thereby ensuring uninterrupted communication of the vehicle-mounted communication system, and improving reliability of the vehicle-mounted communication system.

In conjunction with the first aspect, in some implementations, the vehicle-mounted communication system further includes a seventh vehicle-mounted device and a fifth optical switch; the second optoelectronic module includes a fifth optoelectronic sub-module and a sixth optoelectronic sub-module; the seventh vehicle-mounted device is electrically connected to the fifth optoelectronic sub-module and the sixth optoelectronic sub-module separately; and the first optical coupling splitter is connected to the fifth optoelectronic sub-module and the sixth optoelectronic sub-module through an eighth optical path and a ninth optical path, where the ninth optical path includes the fifth optical switch. Upon determining that the eighth optical path is interrupted, the vehicle-mounted controller controls the fifth optical switch to turn on, so that the first optical coupling splitter and the seventh vehicle-mounted device transmit the first optical signal through the sixth optical sub-module. Upon determining that the eighth optical path is conductive, the vehicle-mounted controller controls the fifth optical switch to turn off, so that the first optical coupling splitter and the seventh vehicle-mounted device transmit the first optical signal through the fifth optical sub-module.

According to a second aspect, an embodiment of this application provides a vehicle. The vehicle is equipped with the vehicle-mounted communication system according to the first aspect to implement beneficial effects of the vehicle-mounted communication system according to the first aspect.

According to this embodiment of this application, an optoelectronic module of a vehicle enables an optical network to adapt to communication between a vehicle-mounted controller and each vehicle-mounted device, which greatly improves a communication rate and a communication bandwidth of a vehicle-mounted communication system. In addition, the structure is simpler, so that applicability and practicability of the vehicle-mounted communication system are improved.

### DESCRIPTION OF DRAWINGS

To describe technical solutions in embodiments of this application or in a conventional technology more clearly, the following briefly introduces accompanying drawings required for describing the embodiments or the conventional technology. Clearly, the accompanying drawings in the following description show merely some embodiments of this application, and a person of ordinary skill in the art may still derive other drawings from these accompanying drawings without creative efforts.
FIG. 1 is a diagram of a structure of a vehicle-mounted communication system according to an embodiment of this application;
FIG. 2 is a diagram of a structure of an optoelectronic module according to an embodiment of this application;
FIG. 3 is a diagram of a structure of a vehicle-mounted communication system according to another embodiment of this application;
FIG. 4 is a diagram of a structure of a vehicle-mounted communication system according to another embodiment of this application;
FIG. 5 is a diagram of a structure of a vehicle-mounted communication system according to another embodiment of this application;
FIG. 6 is a diagram of a structure of a vehicle-mounted communication system according to another embodiment of this application;
FIG. 7 is a diagram of a structure of a vehicle-mounted communication system according to another embodiment of this application;
FIG. 8 is a diagram of a structure of a vehicle-mounted communication system according to another embodiment of this application;
FIG. 9 is a diagram of a structure of a vehicle-mounted communication system according to another embodiment of this application;
FIG. 10 is a diagram of a structure of a vehicle-mounted communication system according to another embodiment of this application;
FIG. 11 is a diagram of a structure of a vehicle-mounted communication system according to another embodiment of this application;
FIG. 12 is a diagram of a structure of a vehicle-mounted communication system according to another embodiment of this application;
FIG. 13 is a diagram of a structure of a vehicle-mounted communication system according to another embodiment of this application;
FIG. 14 is a diagram of a structure of a vehicle-mounted communication system according to another embodiment of this application;
FIG. 15 is a diagram of a structure of a vehicle-mounted communication system according to another embodiment of this application;
FIG. 16 is a diagram of a structure of a vehicle-mounted communication system according to another embodiment of this application;
FIG. 17 is a diagram of a structure of a vehicle-mounted communication system according to another embodiment of this application;
FIG. 18 is a diagram of a structure of a vehicle-mounted communication system according to another embodiment of this application;
FIG. 19 is a diagram of a structure of a vehicle-mounted communication system according to another embodiment of this application;
FIG. 20 is a diagram of a structure of a vehicle-mounted communication system according to another embodiment of this application;
FIG. 21 is a diagram of a structure of a vehicle-mounted communication system according to another embodiment of this application;
FIG. 22 is a diagram of a structure of a vehicle-mounted communication system according to another embodiment of this application;
FIG. 23 is a diagram of a structure of a vehicle-mounted communication system according to another embodiment of this application;
FIG. 24 is a diagram of a structure of a vehicle-mounted communication system according to another embodiment of this application;
FIG. 25 is a diagram of a structure of a vehicle-mounted communication system according to another embodiment of this application;
FIG. 26 is a diagram of a structure of a vehicle-mounted communication system according to another embodiment of this application;
FIG. 27 is a diagram of a structure of a vehicle-mounted communication system according to another embodiment of this application;
FIG. 28 is a diagram of a structure of a vehicle-mounted communication system according to another embodiment of this application;
FIG. 29 is a diagram of a structure of a vehicle-mounted communication system according to another embodiment of this application;
FIG. 30 is a diagram of a structure of a vehicle-mounted communication system according to another embodiment of this application;
FIG. 31 is a diagram of a structure of a vehicle-mounted communication system according to another embodiment of this application;
FIG. 32 is a diagram of a structure of a vehicle-mounted communication system according to another embodiment of this application;
FIG. 33 is a diagram of a structure of a vehicle-mounted communication system according to another embodiment of this application; and
FIG. 34 is a diagram of a structure of a vehicle according to an embodiment of this application.

### DETAILED DESCRIPTION OF EMBODIMENTS

To make a person skilled in the art understand solutions of this application better, the following clearly and completely describes the technical solutions of the embodiment of this application in conjunction with the accompanying drawings in the embodiments of this application.

An existing vehicle-mounted communication system is generally implemented based on a vehicle-mounted Ethernet. However, as demands of people for autonomous driving and intelligent cockpits of vehicles continuously escalate, the number of electronic control units (Electronic Control Unit, ECU) and demands for computing capabilities both show an explosive growth, and there is an increasing demand for real-time information transmission. Therefore, a communication rate of the vehicle-mounted communication system implemented based on the vehicle-mounted Ethernet can no longer meet a use demand of the vehicle-mounted communication system, and a communication network structure is complex. Therefore, a technical problem to be solved by this application is how to improve a communication rate of the vehicle-mounted communication system.

To solve the foregoing problem, this application provides a vehicle-mounted communication system based on an optical communication network, and optoelectronic conversion and communication protocol conversion are implemented through an optoelectronic module. The vehicle-mounted communication system includes a first optoelectronic module and a second optoelectronic module. The first optoelectronic module may convert an electrical signal that meets a first communication protocol and that is sent by the vehicle-mounted controller to obtain an optical signal that meets a second communication protocol, and send the optical signal to the second optoelectronic module. The second optoelectronic module may convert the optical signal that meets the second communication protocol to obtain an electrical signal that meets the first communication protocol, and send the electrical signal to the vehicle-mounted device to implement vehicle-mounted communication. In the vehicle-mounted communication system provided by this application, an optoelectronic module enables an optical network to adapt to the vehicle-mounted communication system, which can improve a communication rate and a communication bandwidth of the vehicle-mounted communication system. In addition, a structure of the vehicle-mounted communication system is simpler, so that applicability and practicability of the vehicle-mounted communication system are improved.

It should be understood that, during practical use, both the vehicle-mounted controller and the vehicle-mounted device in the vehicle-mounted communication system provided by this application have a function of transmitting and receiving an electrical signal, that is, the vehicle-mounted controller may send an electrical signal that carries data to the vehicle-mounted device, the vehicle-mounted device receives the electrical signal. Alternatively, the vehicle-mounted device may send an electrical signal that carries data to the vehicle-mounted controller, the vehicle-mounted controller receives the electrical signal. In addition, optical elements in the vehicle-mounted communication system provided by this application are also reversible. Therefore, for the vehicle-mounted communication system provided by this application, a specific process of bidirectional transmission of an electrical signal between the vehicle-mounted controller and the vehicle-mounted device is similar. Therefore, to avoid redundancy, in this embodiment of this application, an operating scenario in which the vehicle-mounted controller sends an electrical signal to the vehicle-mounted device is used as an example to describe a structure and operating principle of the vehicle-mounted communication system provided by this application.

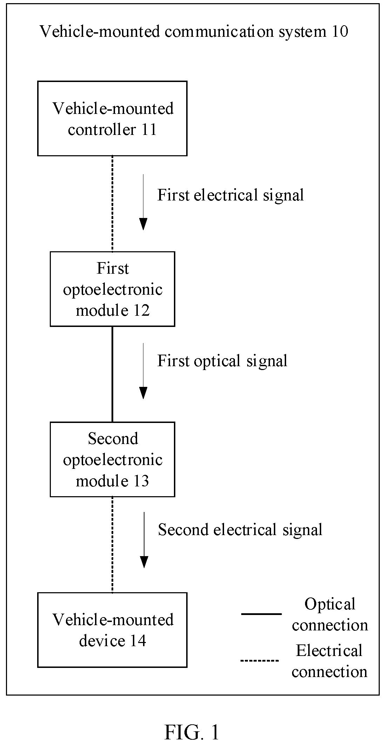

With reference to FIG. 1, FIG. 1 is a diagram of a structure of a vehicle-mounted communication system according to an embodiment of this application. As shown in FIG. 1, the vehicle-mounted communication system 10 may include a vehicle-mounted controller 11, a first optoelectronic module 12, a second optoelectronic module 13, and a vehicle-mounted device 14. The vehicle-mounted controller 11 is electrically connected to the first optoelectronic module 12, the first optoelectronic module 12 is optically coupled (or referred to as optical connection) to the second optoelectronic module 13, and the second optoelectronic module 13 is electrically connected to the vehicle-mounted device 14.

In this embodiment of this application, the vehicle-mounted controller 11 may be any form of controller that can control the vehicle-mounted device 14, for example, an IVC 300 controller. An implementation form of the vehicle-mounted controller 11 is not specifically limited in this embodiment of this application.

In this embodiment of this application, the vehicle-mounted device 14 may be any form of electronic device that can perform communication, such as a camera, a display, a laser radar, an audio, a vehicle-mounted navigator, a dash cam, or a sensor. An implementation form of the vehicle-mounted device 14 is not specifically limited in this embodiment of this application.

In practical operation, the vehicle-mounted controller 11 may be configured to generate a first electrical signal based on determined transmission target data, and send the first electrical signal to the first optoelectronic module 12. The first optoelectronic module 12 may be configured to: after receiving the first electrical signal, perform protocol conversion and electro-optical conversion on the first electrical signal to obtain a first optical signal, and send the first optical signal to the second optoelectronic module 13. The second optoelectronic module 13 may be configured to: after receiving the first optical signal, perform optoelectronic conversion and protocol conversion on the first optical signal to obtain a second electrical signal, and send the second electrical signal to the vehicle-mounted device 14.

In this application, both the first electrical signal and the second electrical signal carry target data. It may be understood that the optical signal also carries the target data. In addition, the first electrical signal and the second electrical signal may be a same electrical signal, or may be different electrical signals that carry the target data. The vehicle-mounted device 14 may be configured to receive the second electrical signal to obtain the target data.

In some implementations, the vehicle-mounted communication system 10 includes one or more vehicle-mounted devices 14 connected to the second optoelectronic module 13. The number of the vehicle-mounted devices 14 is not specifically limited in this embodiment of this application. For example, the number of the vehicle-mounted devices 14 may be 1 to 128.

In some implementations, when the vehicle-mounted communication system 10 includes a plurality of vehicle-mounted devices 14, the vehicle-mounted controller 11 may send a signal to each of the plurality of vehicle-mounted devices. After each of the plurality of vehicle-mounted devices receives the signal sent by the vehicle-mounted controller 11, each vehicle-mounted device may determine whether a received signal is a signal intended for itself. Upon determining that the received signal is a signal intended for itself, the vehicle-mounted device may obtain target data carried in the received signal based on the received signal to perform a related operation. Upon determining that the received signal is not a signal intended for itself, the vehicle-mounted device may clear the received signal.

In some implementations, each vehicle-mounted device of the plurality of vehicle-mounted devices may identify, based on an identifier of the vehicle-mounted device, whether a received signal is a signal intended for itself. If the vehicle-mounted device determines that the received signal includes its own identifier, the vehicle-mounted device may determine that the received signal is a signal intended for itself, and further obtain the target data carried in the received signal to perform a related operation. If the vehicle-mounted device determines that the received signal does not include its own identifier, the vehicle-mounted device may determine that the received signal is not a signal intended for itself, and further clear the received signal.

In this application, a communication mode of the vehicle-mounted communication system 10 may be time division multiplexing communication or wavelength division multiplexing communication.

In this embodiment of this application, a vehicle is equipped with a vehicle-mounted communication system based on an optical transmission network. An optoelectronic module of the vehicle-mounted communication system can enable an optical network to adapt to communication between the vehicle-mounted controller 11 and each vehicle-mounted device better. The structure can greatly improve a communication rate and increase a communication bandwidth of the vehicle-mounted communication system 10. In addition, the structure is simple, so that applicability and practicability of the vehicle-mounted communication system are improved.

In some implementations, the first optical signal is an optical signal that meets a second communication protocol and that is obtained by performing, by the first optoelectronic module, protocol conversion on the first electrical signal that meets a first communication protocol to obtain a third electrical signal that meets the second communication protocol and performing electro-optical conversion on the third electrical signal.

That is, the first optoelectronic module 12 may be configured to: after receiving the first electrical signal that meets the first communication protocol, perform protocol conversion on the first electrical signal to obtain the third electrical signal that meets the second communication protocol, perform electro-optical conversion on the third electrical signal to obtain a first optical signal that meets the second communication protocol, and send the first optical signal to the second optoelectronic module 13.

In some implementations, the second electrical signal is an electrical signal that meets the first communication protocol and that is obtained by performing, by the second optoelectronic module, optoelectronic conversion on the first optical signal to obtain a fourth electrical signal that meets the second communication protocol and performing protocol conversion on the fourth electrical signal.

In other words, the second optoelectronic module 13 may be configured to perform optoelectronic conversion on the received first optical signal to obtain the fourth electrical signal that meets the second communication protocol, perform protocol conversion on the fourth electrical signal to obtain the second electrical signal that meets the first communication protocol, and send the second electrical signal to the vehicle-mounted device 14.

In some implementations, the vehicle-mounted device 14 may be configured to receive the second electrical signal to obtain the target data.

The first communication protocol is a communication transmission protocol set between the vehicle-mounted controller 11 and the vehicle-mounted device 14, for example, a controller area network (Controller Area Network, CAN) bus protocol. The second communication protocol is a communication transmission protocol set between the first optoelectronic module 12 and the second optoelectronic module 13, for example, a passive optical network (Passive Optical Network, PON).

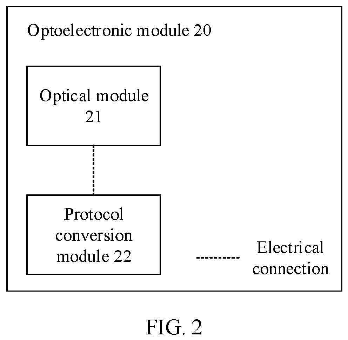

In some implementations, the vehicle-mounted communication system 10 includes a plurality of optoelectronic modules, such as the first optoelectronic module 12 and the second optoelectronic module 13. In some implementations, the first optoelectronic module 12 includes a protocol conversion module and an optical module, and/or, the second optoelectronic module 13 includes an optical module and a protocol conversion module. The optical module is electrically connected to the protocol conversion module. Because these optoelectronic modules have a same structure and function, these optoelectronic modules are collectively referred to as the optoelectronic module 20 herein as an example for description. With reference to FIG. 2, FIG. 2 is a diagram of a structure of an optoelectronic module according to an embodiment of this application. As shown in FIG. 2, the optoelectronic module 20 includes an optical module 21 and a protocol conversion module 22. The optical module 21 is electrically connected to the protocol conversion module 22.

In this embodiment of this application, the protocol conversion module 22 may be any form of processor that can perform protocol conversion, such as a gateway. An implementation form of the protocol conversion module 22 is not specifically limited in this embodiment of this application.

Specifically, the protocol conversion module 22 may be configured to convert a received electrical signal that meets a first communication protocol into an electrical signal that meets a second communication protocol, and/or convert a received electrical signal that meets the second communication protocol into an electrical signal that meets the first communication protocol. The optical module 21 may be configured to convert a received electrical signal into a corresponding optical signal and output the optical signal, and/or convert a received optical signal into a corresponding electrical signal and output the optical signal. Alternatively, the optical module 21 may be configured to perform optoelectronic conversion on a received optical signal that meets the second communication protocol to obtain a corresponding electrical signal that meets the second communication protocol, and send the electrical signal that meets the second communication protocol to the protocol conversion module 22, thereby performing communication protocol conversion on the electrical signal that meets the second communication protocol to obtain the electrical signal that meets the first communication protocol. In addition, the protocol conversion module 22 may be configured to perform communication protocol conversion on a received electrical signal that meets the first communication protocol to obtain the electrical signal that meets the second communication protocol, and send the electrical signal that meets the second communication protocol to the optical module 21, thereby performing electro-optical conversion on the electrical signal that meets the second communication protocol to obtain a corresponding optical signal and outputting the optical signal.

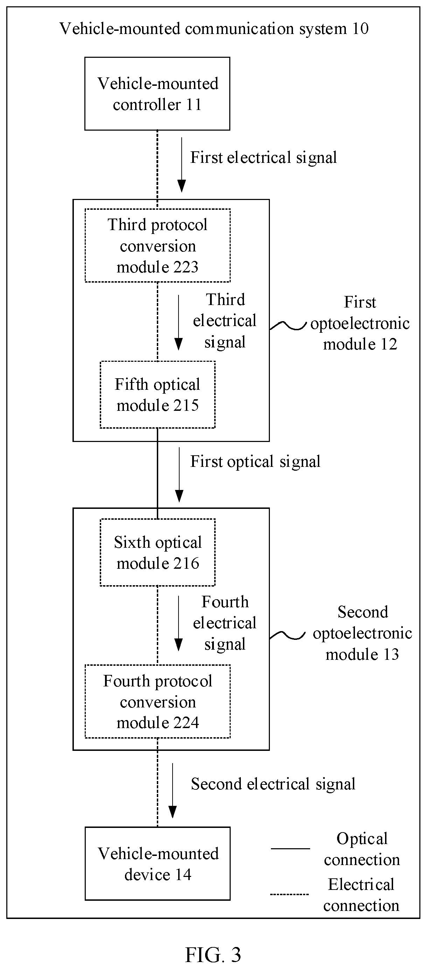

For example, with reference to FIG. 3, FIG. 3 is a diagram of a structure of a vehicle-mounted communication system according to another embodiment of this application. Compared with the vehicle-mounted communication system 10 shown in FIG. 1, in the vehicle-mounted communication system 10 shown in FIG. 3, the first optoelectronic module 12 includes a fifth optical module 215 and a third protocol conversion module 223, and the second optoelectronic module 13 includes a sixth optical module 216 and a fourth protocol conversion module 224. The third protocol conversion module 223 may be electrically connected to the vehicle-mounted controller 11, the third protocol conversion module 223 may be electrically connected to the fifth optical module 215, the fifth optical module 215 may be optically coupled to the sixth optical module 216, the sixth optical module 216 may be electrically connected to the fourth protocol conversion module 224, and the fourth protocol conversion module 224 may be electrically connected to the vehicle-mounted device 14.

Specifically, the third protocol conversion module 223 may be configured to receive the first electrical signal that is sent by the vehicle-mounted controller 11 and that meets the first communication protocol, perform protocol conversion on the first electrical signal to obtain the third electrical signal that meets the second communication protocol, and send the third electrical signal to the fifth optical module 215. The fifth optical module 215 may be configured to perform electro-optical conversion on the third electrical signal to obtain the first optical signal that meets the second communication protocol, and send the first optical signal to the sixth optical module 216. The sixth optical module 216 may be configured to perform optoelectronic conversion on the received first optical signal to obtain the fourth electrical signal that meets the second communication protocol, and send the fourth electrical signal to the fourth protocol conversion module 224. The fourth protocol conversion module 224 may be configured to perform protocol conversion on the fourth electrical signal to obtain the second electrical signal that meets the first communication protocol, and send the second electrical signal to the vehicle-mounted device 14.

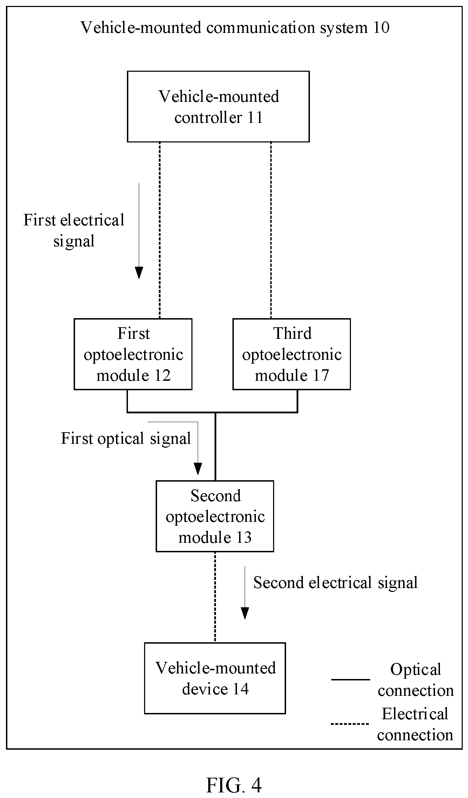

In some implementations, with reference to FIG. 4, FIG. 4 is a diagram of a structure of a vehicle-mounted communication system according to another embodiment of this application. Compared with the vehicle-mounted communication system 10 shown in FIG. 1, the vehicle-mounted communication system 10 shown in FIG. 4 further includes a third optoelectronic module 17. The third optoelectronic module 17 may be electrically connected to the vehicle-mounted controller 11, and the third optoelectronic module 17 may be further optically coupled to the second optoelectronic module 13.

In some implementations, the second optoelectronic module 13 may establish connection with the first optoelectronic module 12 and the third optoelectronic module 17 separately through a waveguide. Specifically, both the first optoelectronic module 12 and the third optoelectronic module 17 may be connected to the second optoelectronic module 13 through a first waveguide.

In specific implementation, the vehicle-mounted controller 11 may be configured to: when communication between the vehicle-mounted controller 11 and the first optoelectronic module 12 fails, electrically connect to the third optoelectronic module 17, and send the first electrical signal to the third optoelectronic module 17. The third optoelectronic module 17 may be configured to: when the communication between the vehicle-mounted controller 11 and the first optoelectronic module 12 fails, perform optoelectronic conversion and protocol conversion on the first electrical signal to obtain the first optical signal, and send the first optical signal to the second optoelectronic module 13.

Alternatively, the vehicle-mounted controller 11 may be configured to: upon determining that the vehicle-mounted controller 11 is disconnected from the first optoelectronic module 12, control to electrically connect to the third optoelectronic module 17, and send the first electrical signal that meets a first communication protocol to the third optoelectronic module 17. The third optoelectronic module 17 may be configured to: upon determining that the vehicle-mounted controller 11 is disconnected from the first optoelectronic module 12, perform protocol conversion on the first electrical signal to obtain the third electrical signal that meets the second communication protocol, perform optoelectronic conversion on the third electrical signal to obtain the first optical signal that meets the second communication protocol, and send the first optical signal to the second optoelectronic module 13.

In the foregoing implementation, the vehicle-mounted controller 11 in the vehicle-mounted communication system 10 may be connected to the second optoelectronic module through a plurality of optoelectronic modules, so that a communication rate and a communication bandwidth of the vehicle-mounted communication system can be improved. In addition, when communication between the vehicle-mounted controller 11 and one optoelectronic module fails, the first optical signal may be transmitted to the second optoelectronic module through another optoelectronic module, which can also be used as a standby circuit to ensure uninterrupted communication of the vehicle-mounted communication system 10 and improve reliability of the vehicle-mounted communication system 10.

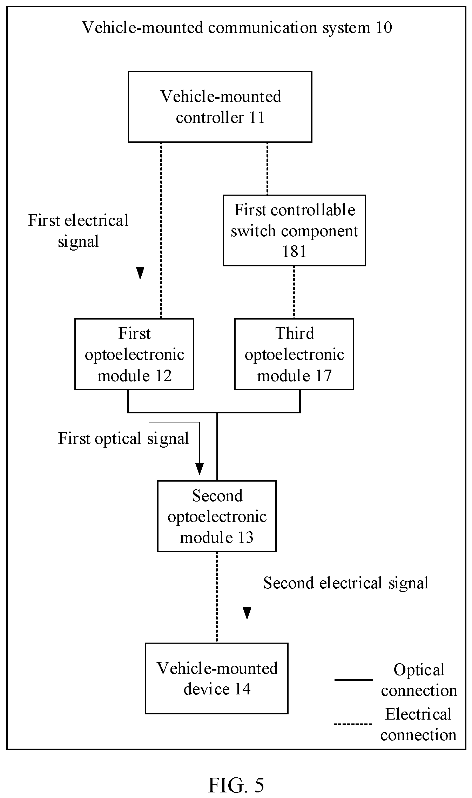

In some implementations, with reference to FIG. 5, FIG. 5 is a diagram of a structure of a vehicle-mounted communication system according to another embodiment of this application. Compared with the vehicle-mounted communication system 10 shown in FIG. 4, the vehicle-mounted communication system 10 shown in FIG. 5 further includes a controllable switch component (referred to as a first controllable switch component for ease of differentiation) 181. The third optoelectronic module 17 may be electrically connected to the vehicle-mounted controller 11 through the first controllable switch component 181.

In specific implementation, the first controllable switch component 181 may be configured to: when the communication between the vehicle-mounted controller 11 and the first optoelectronic module 12 fails, establish an electrical connection between the vehicle-mounted controller 11 and the third optoelectronic module 17, so that the vehicle-mounted controller 11 sends the first electrical signal to the third optoelectronic module 17. The first controllable switch component 181 may be further configured to: when the communication between the vehicle-mounted controller 11 and the first optoelectronic module 12 is normal, disconnect the electrical connection between the vehicle-mounted controller 11 and the third optoelectronic module 17, so that the vehicle-mounted controller 11 sends the first electrical signal to the first optoelectronic module 12.

Alternatively, the vehicle-mounted controller 11 may be configured to: upon determining that the vehicle-mounted controller 11 is disconnected from the first optoelectronic module 12, control the first controllable switch component 181 to turn on, thereby sending the first electrical signal that meets a first communication protocol to the third optoelectronic module 17. The vehicle-mounted controller 11 may be configured to: upon determining that the vehicle-mounted controller 11 is connected to the first optoelectronic module 12, control the first controllable switch component 181 to turn off, thereby sending the first electrical signal that meets the first communication protocol to the first optoelectronic module 12.

It should be understood that the vehicle-mounted controller 11 preferentially sends the first electrical signal to the first optoelectronic module 12. When determining that the vehicle-mounted controller 11 is disconnected from the first optoelectronic module 12, the vehicle-mounted controller 11 may control the first controllable switch component 181 to turn on to send the first electrical signal to the third optoelectronic module 17, thereby ensuring uninterrupted communication of the vehicle-mounted communication system 10.

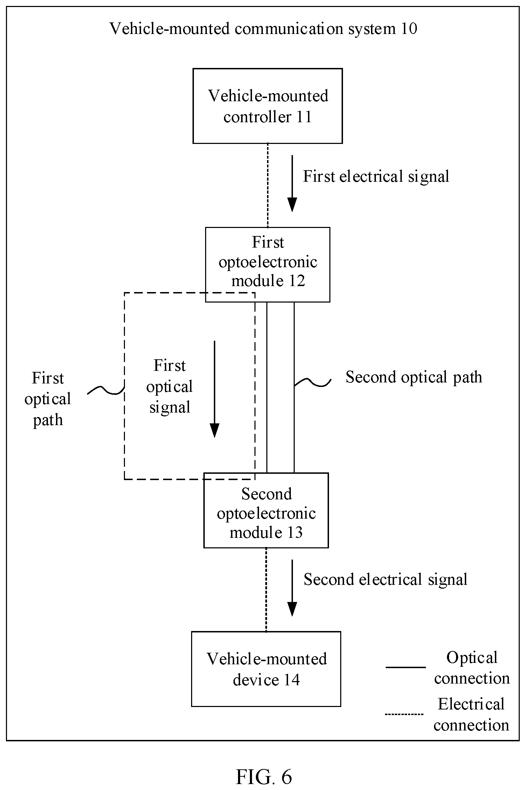

In some implementations, with reference to FIG. 6, FIG. 6 is a diagram of a structure of a vehicle-mounted communication system according to another embodiment of this application. As shown in FIG. 6, the vehicle-mounted communication system 10 includes a first optical path and a second optical path, and each of the first optical path and the second optical path may be connected to a first optoelectronic module 12 and a second optoelectronic module 13. Alternatively, the first optoelectronic module 12 may be optically coupled to the second optoelectronic module 13 through a waveguide. Specifically, the first optoelectronic module 12 may be optically coupled to the second optoelectronic module 13 through a first waveguide, and the first optical path includes the first waveguide. The first optoelectronic module 12 may also be optically coupled to the second optoelectronic module 13 through a second waveguide, and the second optical path may include the second waveguide.

During practical operation, the first optoelectronic module 12 may transmit a first optical signal through the first optical path and/or the second optical path.

In some implementations, when the first optical path fails, the first optoelectronic module 12 may be configured to transmit the first optical signal through the second optical path. That is, upon determining that the first optical path fails, a vehicle-mounted controller 11 may control the first optoelectronic module 12 to transmit the first optical signal through the second optical path.

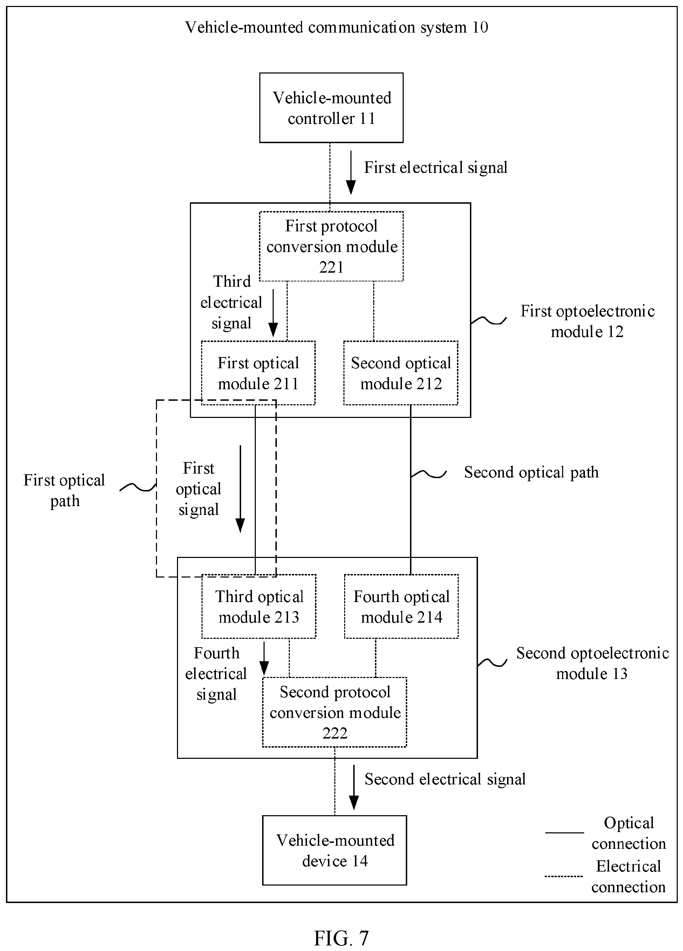

In some implementations, with reference to FIG. 7, FIG. 7 is a diagram of a structure of a vehicle-mounted communication system according to another embodiment of this application. Compared with the vehicle-mounted communication system 10 shown in FIG. 6, in the vehicle-mounted communication system 10 shown in FIG. 7, the first optoelectronic module 12 includes a first optical module 211, a second optical module 212, and a first protocol conversion module 221; and the second optoelectronic module 13 includes a third optical module 213, a fourth optical module 214, and a second protocol conversion module 222. The first protocol conversion module 221 may be electrically connected to the first optical module 211 and the second optical module 212 separately, and the second protocol conversion module 222 may be electrically connected to the third optical module 213 and the fourth optical module 214 separately.

The first optical path may include the first optical module 211 and the third optical module 213. The second optical path may include the second optical module 212 and the fourth optical module 214.

In specific implementation, the vehicle-mounted controller 11 may send a first electrical signal that meets a first communication protocol to the first protocol conversion module 221. Then, the first protocol conversion module 221 may perform protocol conversion on the first electrical signal to obtain a third electrical signal that meets a second communication protocol.

When the vehicle-mounted communication system 10 performs communication by using the first optical path, the first protocol conversion module 221 may send the third electrical signal to the first optical module 211. Then, the first optical module 211 may perform electro-optical conversion on the third electrical signal to obtain a first optical signal that meets the second communication protocol, and send the first optical signal to the third optical module 213. The third optical module 213 may perform optoelectronic conversion on the first optical signal to obtain a fourth electrical signal that meets the second communication protocol, and send the fourth electrical signal to the second protocol conversion module 222. Then, the second protocol conversion module 222 may perform protocol conversion on the fourth electrical signal to obtain a second electrical signal that meets the first communication protocol, and send the second electrical signal to the vehicle-mounted device 14.

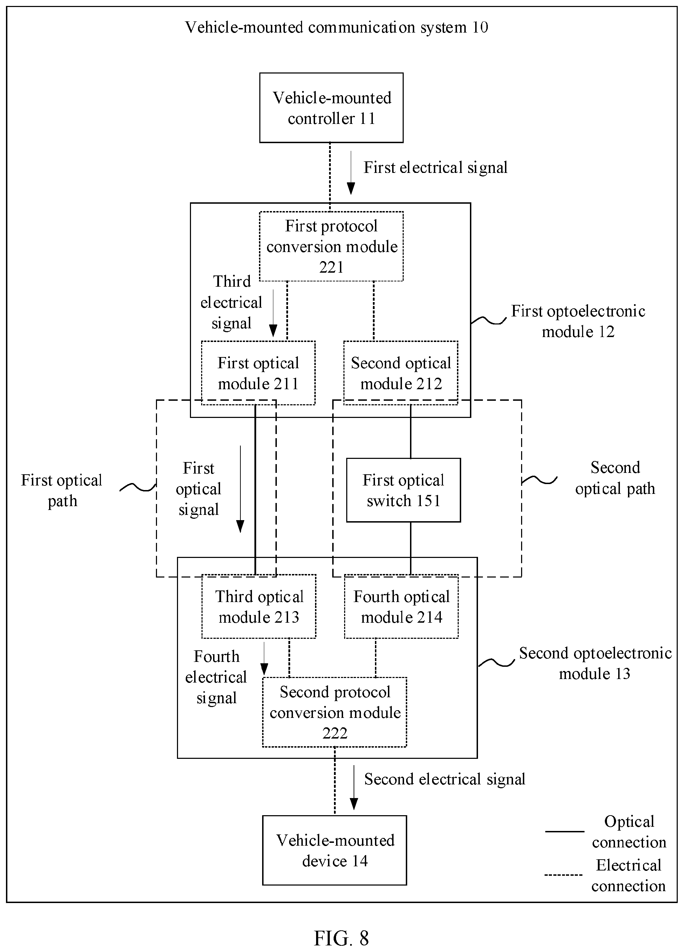

In some implementations, with reference to FIG. 8, FIG. 8 is a diagram of a structure of a vehicle-mounted communication system according to another embodiment of this application. Compared with the vehicle-mounted communication system 10 shown in FIG. 7, the vehicle-mounted communication system 10 shown in FIG. 8 further includes a first optical switch 151 disposed on the second optical path. Specifically, the first optoelectronic module 12 may also be optically coupled to the second optoelectronic module 13 through a third waveguide and a fourth waveguide, the third waveguide and the fourth waveguide may be connected through the first optical switch 151, and the second optical path may include the third waveguide and the fourth waveguide.

In specific implementation, the first optical switch 151 may be configured to turn on when the first optical path fails, so that the first optoelectronic module 12 transmits a first optical signal through the second optical path; and/or the first optical switch 151 may be further configured to turn off when the first optical path is conductive, so that the first optoelectronic module 12 transmits the first optical signal through the first optical path.

Alternatively, upon determining that the first optical path is interrupted, the vehicle-mounted controller 11 may control the first optical switch 151 to turn on, so that the first optoelectronic module 12 and the second optoelectronic module 13 transmit the first optical signal through the second optical path. Upon determining that the first optical path is conductive, the vehicle-mounted controller 11 controls the first optical switch 151 to turn off, so that the first optoelectronic module and the second optoelectronic module transmit the first optical signal through the first optical path.

In some implementations, after the vehicle-mounted controller 11 sends an electrical signal to the vehicle-mounted device 14 through the first optical path, upon determining that a feedback signal sent by the vehicle-mounted device 14 is not received through the first optical path within preset duration, the vehicle-mounted controller 11 may determine that the first optical path is interrupted. The preset duration may be an empirical value obtained through multiple experiments. In addition, the preset duration may be a factory default of the vehicle-mounted communication system, or may be temporarily configured by an administrator.

It should be understood that the vehicle-mounted communication system 10 preferably transmits the first optical signal by using the first optical path, that is, a primary optical path. When the vehicle-mounted controller 11 determines that the primary optical path is interrupted, the vehicle-mounted controller 11 may switch to the second optical path, that is, a standby optical path (redundant optical path), to transmit the first optical signal.

It should be noted here that the optical switch may include two ports, and the two ports are respectively connected to the two optical modules to establish a connection between the two optical modules.

In some implementations, when determining that the first optical path is interrupted, the vehicle-mounted controller 11 may control the first optical switch 151 to turn on, thereby switching to use the second optical path for communication. The first protocol conversion module 221 may send a third electrical signal to the second optical module 212. Then, the second optical module 212 may perform electro-optical conversion on the third electrical signal to obtain a first optical signal that meets a second communication protocol, and send the first optical signal to the fourth optical module 214. The fourth optical module 214 may perform optoelectronic conversion on the first optical signal to obtain a fourth electrical signal that meets a second communication protocol, and send the fourth electrical signal to the second protocol conversion module 222. Then, the second protocol conversion module 222 may perform protocol conversion on the fourth electrical signal to obtain a second electrical signal that meets the first communication protocol, and send the second electrical signal to the vehicle-mounted device 14.

In the foregoing implementation, the first optoelectronic module 12 and the second optoelectronic module 13 may be connected through the first optical path, that is, the primary optical path, or through the second optical path, that is, the standby optical path. When determining that the primary optical path is interrupted, the vehicle-mounted controller 11 may control the first optical switch 151 to turn on, so that the vehicle-mounted communication system 10 switches to the standby optical path to transmit the first optical signal, thereby ensuring uninterrupted communication of the vehicle-mounted communication system 10, and improving reliability of the vehicle-mounted communication system 10.

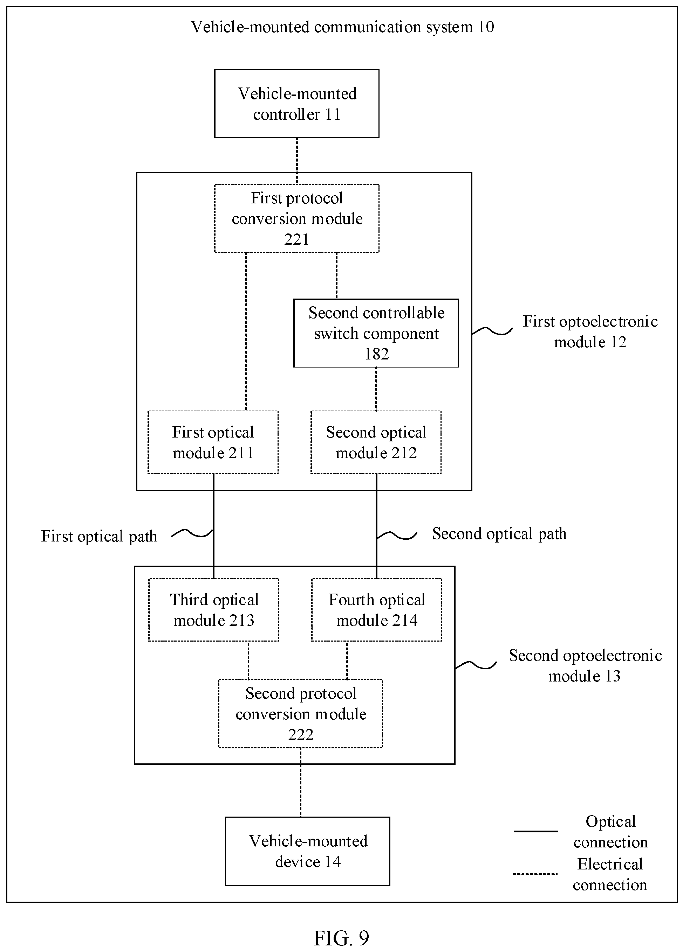

In some implementations, with reference to FIG. 9, FIG. 9 is a diagram of a structure of a vehicle-mounted communication system according to another embodiment of this application. Compared with the vehicle-mounted communication system 10 shown in FIG. 7, the vehicle-mounted communication system 10 shown in FIG. 9 further includes a second controllable switch component 182 disposed between the first protocol conversion module 221 and the second optical module 212. That is, the first protocol conversion module 221 and the second optical module 212 may be electrically connected through the second controllable switch component 182.

In specific implementation, the second controllable switch component 182 may be configured to turn on when the first optical path fails, so that the first optoelectronic module 12 transmits a first optical signal through the second optical path; and/or the second controllable switch component 182 may be configured to turn off when the first optical path is conductive, so that the first optoelectronic module 12 transmits the first optical signal through the first optical path.

Alternatively, upon determining that the first optical path is interrupted, the vehicle-mounted controller 11 may control the second controllable switch component 182 to turn on, so that the first optoelectronic module 12 and the second optoelectronic module 13 transmit the first optical signal through the second optical path. Upon determining that the first optical path is conductive, the vehicle-mounted controller 11 may control the second controllable switch component 182 to turn off, and may control the second controllable switch component 182 to turn off, so that the first optoelectronic module 12 and the second optoelectronic module 13 transmit the first optical signal through the first optical path.

The first optical path may serve as a primary optical path of the vehicle-mounted communication system 10, and the second optical path may serve as a standby optical path of the vehicle-mounted communication system 10.

It should be understood that, when the vehicle-mounted controller 11 determines that the primary optical path is interrupted, the vehicle-mounted controller 11 may switch to the standby optical path to transmit the first optical signal. Specifically, when determining that the first optical path is interrupted, the vehicle-mounted controller 11 may control the second controllable switch component 182 to turn on, thereby transmitting the first optical signal through the second optical path.

In this embodiment of this application, the controllable switch component may be any form of switch component that can perform corresponding control based on a signal of the vehicle-mounted controller 11, such as a metal-oxide semiconductor field effect transistor (Metal-Oxide-Semiconductor Field-Effect Transistor, MOSFET, MOS for short, field effect transistor or MOS transistor for short), where the field effect transistors are classified into a PMOS transistor (P-channel type) and an NMOS transistor (N-channel type). A form of the controllable switch component is not specifically limited in this embodiment of this application.

In the foregoing implementation, the first optoelectronic module 12 and the second optoelectronic module 13 may be connected through the first optical path, that is, the primary optical path, or through the second optical path, that is, the standby optical path. When determining that the primary optical path is interrupted, the vehicle-mounted controller 11 may control the second controllable switch component 182 to turn on, so that the vehicle-mounted communication system 10 switches to the standby optical path to transmit the first optical signal, thereby ensuring uninterrupted communication of the vehicle-mounted communication system 10, and improving reliability of the vehicle-mounted communication system 10.

It should be noted that two optical modules in the first optoelectronic module 12 may share one protocol conversion module, thereby implementing communication protocol conversion of an electrical signal. Similarly, two optical modules in the second optoelectronic module 13 may also share one protocol conversion module, thereby implementing communication protocol conversion of an electrical signal.

In some implementations, the second optoelectronic module 13 may include M optoelectronic sub-modules, where M is a positive integer greater than or 1. Because there is a standby optical path between the first optoelectronic module 12 and the second optoelectronic module 13, each of the M optoelectronic sub-modules may have two optical modules, and there may be 2M optical modules in the first optoelectronic module 12. Specifically, the two optical modules included in each of the M optoelectronic sub-modules may be connected to the two optical modules in the first optoelectronic module 12 through the primary optical path and the standby optical path, respectively. That is, one optical module in the first optoelectronic module 12 and one optical module in the second optoelectronic module 13 are optically connected in a one-to-one correspondence.

The vehicle-mounted communication system 10 preferably transmits a signal by using the primary optical path. Upon determining that the primary optical path is interrupted, the vehicle-mounted controller 11 may switch an input/output port in the first optoelectronic module 12 to the standby optical path, thereby performing signal transmission by using the standby optical path.

It should be additionally noted that, when there are 2M optical modules in the first optoelectronic module 12, and there are two optical modules in each of the M optoelectronic sub-modules included in the second optoelectronic module 13, each of the first optoelectronic module 12 and the second optoelectronic module 13 may have one protocol conversion module merely. That is, when there are a plurality of optical modules in the optoelectronic module, the plurality of optical modules may share one protocol conversion module, thereby implementing communication protocol conversion of an electrical signal.

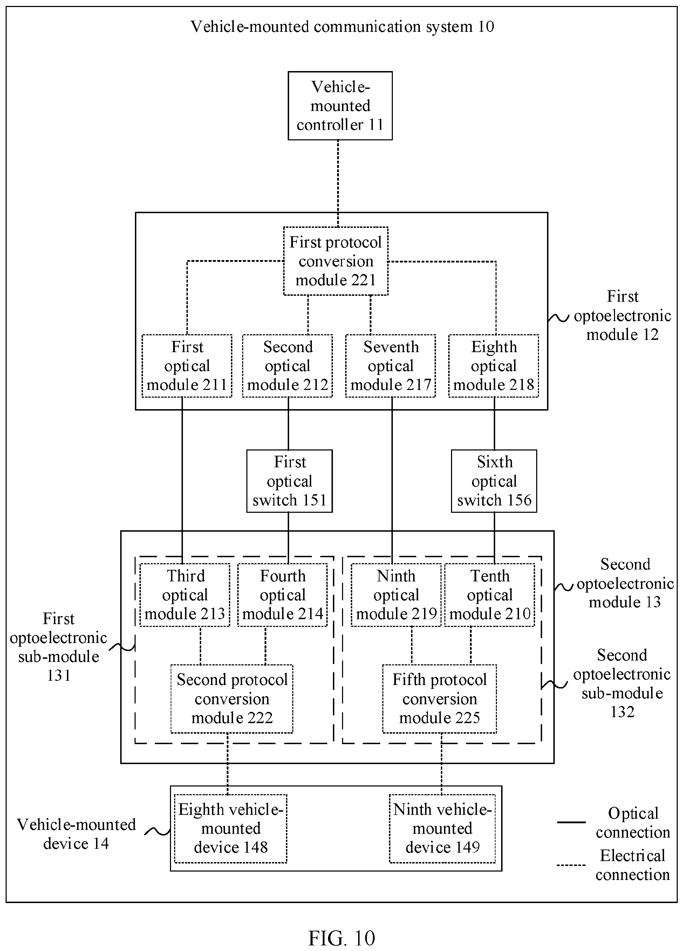

For ease of understanding, an example in which the second optoelectronic module 13 includes two optoelectronic sub-modules, that is, the first optoelectronic sub-module 131 and the second optoelectronic sub-module 132, is used for description here. With reference to FIG. 10, FIG. 10 is a diagram of a structure of a vehicle-mounted communication system according to another embodiment of this application. Compared with the vehicle-mounted communication system 10 shown in FIG. 1, in the vehicle-mounted communication system 10 shown in FIG. 10, the first optoelectronic module 12 includes a first optical module 211, a second optical module 212, a seventh optical module 217, an eighth optical module 218, and a first protocol conversion module 221. The second optoelectronic module 13 includes a first optoelectronic sub-module 131 and a second optoelectronic sub-module 131, where the first optoelectronic sub-module 131 includes a third optical module 213, a fourth optical module 214, and a second protocol conversion module 222, and the second optoelectronic sub-module 132 includes a ninth optical module 219, a tenth optical module 210, and a fifth protocol conversion module 225. The vehicle-mounted device 14 includes an eighth vehicle-mounted device 148 and a ninth vehicle-mounted device 149.

A first optical path may exist between the first optical module 211 and the third optical module 213. A second optical path may exist between the second optical module 212 and the fourth optical module 214, and the second optical path may include a first optical switch 151. A tenth optical path may exist between the seventh optical module 217 and the ninth optical module 219, and an eleventh optical path may exist between the eighth optical module 218 and the tenth optical module 210, where the eleventh optical path may include a sixth optical switch 156. The first protocol conversion module 221 may be electrically connected to the first optical module 211, the second optical module 212, the seventh optical module 217, and the eighth optical module 218 separately. The second protocol conversion module 222 may be electrically connected to the third optical module 213 and the fourth optical module 214 separately. The fifth protocol conversion module 225 may be electrically connected to the ninth optical module 219 and the tenth optical module 210 separately. The second protocol conversion module 222 may be electrically connected to the eighth vehicle-mounted device 148. The fifth protocol conversion module 225 may be electrically connected to the ninth vehicle-mounted device 149.

The first optical path and the tenth optical path may serve as primary optical paths of the vehicle-mounted communication system 10, and the second optical path and the eleventh optical path may serve as standby optical paths of the vehicle-mounted communication system 10.

It should be understood that, when the vehicle-mounted controller 11 determines that the primary optical path is interrupted, the vehicle-mounted controller 11 may switch to the standby optical path to transmit the first optical signal. Specifically, when determining that the first optical path is interrupted, the vehicle-mounted controller 11 may control the first optical switch 151 to turn on to transmit the first optical signal through the second optical path. When determining that the tenth optical path is interrupted, the vehicle-mounted controller 11 may control the sixth optical switch 156 to turn on to transmit the first optical signal through the eleventh optical path.

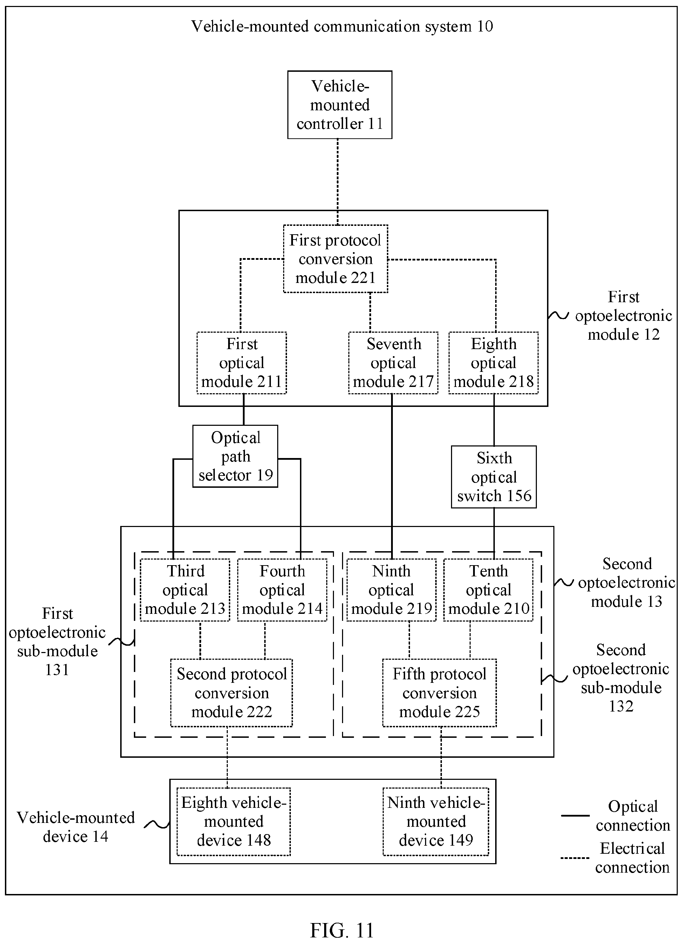

In some implementations, with reference to FIG. 11, FIG. 11 is a diagram of a structure of a vehicle-mounted communication system according to another embodiment of this application. Compared with the vehicle-mounted communication system 10 shown in FIG. 1, in the vehicle-mounted communication system 10 shown in FIG. 11, the first optoelectronic module 12 includes a first optical module 211, a seventh optical module 217, an eighth optical module 218, and a first protocol conversion module 221. The second optoelectronic module 13 includes a first optoelectronic sub-module 131 and a second optoelectronic sub-module 132, where the first optoelectronic sub-module 131 includes a third optical module 213, a fourth optical module 214, and a second protocol conversion module 222, and the second optoelectronic sub-module 132 includes a ninth optical module 219, a tenth optical module 210, and a fifth protocol conversion module 225. The vehicle-mounted communication system 10 shown in FIG. 11 further includes an optical path selector 19 and a sixth optical switch 156. The vehicle-mounted device 14 includes an eighth vehicle-mounted device 148 and a ninth vehicle-mounted device 149.

The first protocol conversion module 221 may be electrically connected to the first optical module 211, the seventh optical module 217, and the eighth optical module 218 separately. The second protocol conversion module 222 may be electrically connected to the third optical module 213 and the fourth optical module 214 separately. The fifth protocol conversion module 225 may be electrically connected to the ninth optical module 219 and the tenth optical module 210 separately. The second protocol conversion module 222 may be electrically connected to the eighth vehicle-mounted device 148. The fifth protocol conversion module 225 may be electrically connected to the ninth vehicle-mounted device 149.

The first optical module 211 may be optically coupled to the third optical module 213 and the fourth optical module 214 through the optical path selector 19. Specifically, the first optical module 211, the optical path selector 19, and the third optical module 213 may form a first optical path, and the first optical module 211, the optical path selector 19, and the fourth optical module 214 may form a second optical path.

A tenth optical path may exist between the seventh optical module 217 and the ninth optical module 219, and an eleventh optical path may exist between the eighth optical module 218 and the tenth optical module 210, where the eleventh optical path may include a sixth optical switch 156.

The first optical path and the tenth optical path may serve as primary optical paths of the vehicle-mounted communication system 10, and the second optical path and the eleventh optical path may serve as standby optical paths of the vehicle-mounted communication system 10.

In specific implementation, when determining that the first optical path is interrupted, the vehicle-mounted controller 11 may control the optical path selector 19 to make the second optical path conductive, that is, the vehicle-mounted communication system 10 transmits a first optical signal through the second optical path. When determining that the second optical path is interrupted, the vehicle-mounted controller 11 may control the optical path selector 19 to make the first optical path conductive, that is, the vehicle-mounted communication system 10 transmits the first optical signal through the first optical path. Upon determining that the tenth optical path is interrupted, the vehicle-mounted controller 11 may control the sixth optical switch 156 to turn on, so that the vehicle-mounted communication system 10 transmits the first optical signal through the eleventh optical path. Upon determining that the eleventh optical path is conductive, the vehicle-mounted controller may control the sixth optical switch 156 to turn off, so that the vehicle-mounted communication system 10 transmits the first optical signal through the tenth optical path.

It should be noted here that the optical path selector 19 includes at least three ports, and the three ports are connected to the first optical module 211, the third optical module 213, and the fourth optical module 214, respectively. The optical path selector 19 may be configured to: when the vehicle-mounted controller 11 detects that the first optical path is interrupted, switch a connection between the first optical module 211 and the third optical module 213 to a connection between the first optical module 211 and the fourth optical module 214.

In the foregoing implementation, the first optical module 211 may be optically coupled to the third optical module 213 and the fourth optical module 214 separately through the optical path selector 19 to implement switching between the primary optical path and the standby optical path, thereby reducing structural complexity of the vehicle-mounted communication system 10, ensuring uninterrupted communication of the vehicle-mounted communication system 10, and improving reliability of the vehicle-mounted communication system 10.

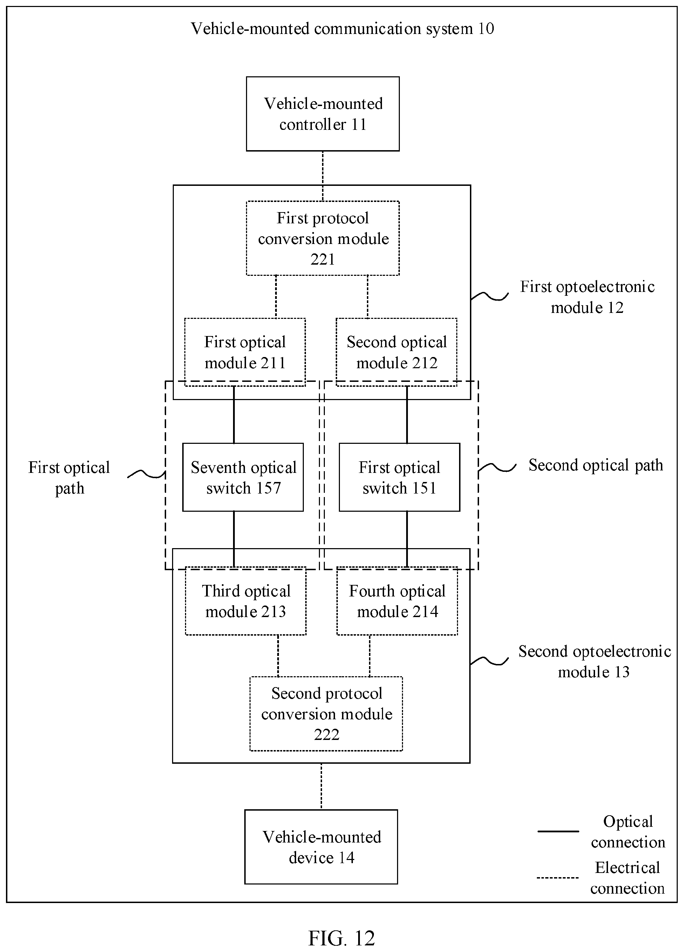

In some implementations, with reference to FIG. 12, FIG. 12 is a diagram of a structure of a vehicle-mounted communication system according to another embodiment of this application. Compared with the vehicle-mounted communication system 10 shown in FIG. 8, the vehicle-mounted communication system 10 shown in FIG. 12 further includes a seventh optical switch 157 disposed on the first optical path, where the seventh optical switch 157 is connected to the first optical module 211 and the third optical module 213.

In specific implementation, when determining that the first optical path is interrupted, the vehicle-mounted controller 11 may control the seventh optical switch 157 to turn off and the first optical switch 151 to turn on, so that the first optoelectronic module 12 and the second optoelectronic module 13 transmit a first optical signal through the second optical path.

The first optical path may include a first optical module 211, a seventh optical switch 157, and a third optical module 213.

In some implementations, after preset duration, the vehicle-mounted controller 11 may be configured to control the seventh optical switch 157 to turn on and the first optical switch 151 to turn off, thereby determining whether the first optical path is conductive. The vehicle-mounted controller 11 may be configured to: upon determining that the first optical path is conductive, keep the seventh optical switch 157 on and the first optical switch 151 off, so that the first optoelectronic module 12 and the second optoelectronic module 13 transmit the first optical signal through the first optical path. The vehicle-mounted controller 11 may be configured to: upon determining that the first optical path is still interrupted, control the seventh optical switch 157 to turn off and the first optical switch to turn on, so that the first optoelectronic module 12 and the second optoelectronic module 13 transmit the first optical signal through the second optical path.

The preset duration may be an empirical value obtained through multiple experiments. In addition, the preset duration may be a factory default of the vehicle-mounted communication system 10, or may be temporarily configured by an administrator.

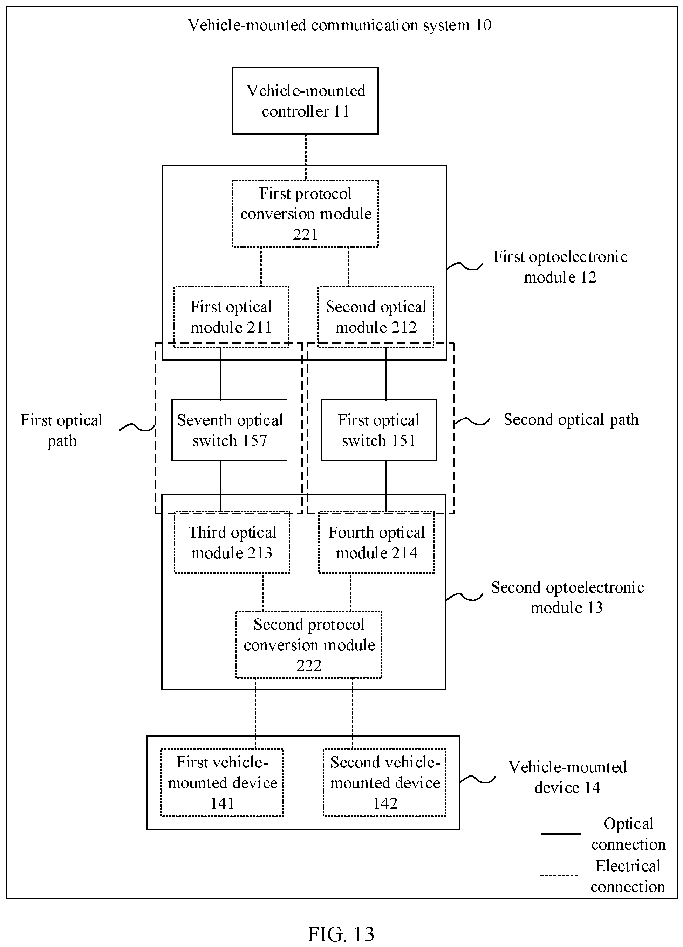

In some implementations, with reference to FIG. 13, FIG. 13 is a diagram of a structure of a vehicle-mounted communication system according to another embodiment of this application. Compared with the vehicle-mounted communication system 10 shown in FIG. 12, in the vehicle-mounted communication system 10 shown in FIG. 13, the vehicle-mounted device 14 includes a first vehicle-mounted device 141 and a second vehicle-mounted device 142, and the second optoelectronic module 13 may be electrically connected to the first vehicle-mounted device 141 and the second vehicle-mounted device 142 separately.

In specific implementation, the second optoelectronic module 13 may be configured to perform optoelectronic conversion on a received first optical signal to obtain a fourth electrical signal that meets a second communication protocol, perform optoelectronic conversion on the fourth electrical signal to obtain a second electrical signal that meets a first communication protocol, and send the second electrical signal to the first vehicle-mounted device 141 and the second vehicle-mounted device 142 separately.

It should be noted that the foregoing describes a case in which the second optoelectronic module 13 is connected to two vehicle-mounted devices. During practical implementation, the second optoelectronic module 13 may be connected to three or more vehicle-mounted devices. Specific structures and functions may refer to the foregoing described structures and functions when two vehicle-mounted devices are connected. To avoid redundancy, details are not described herein again.

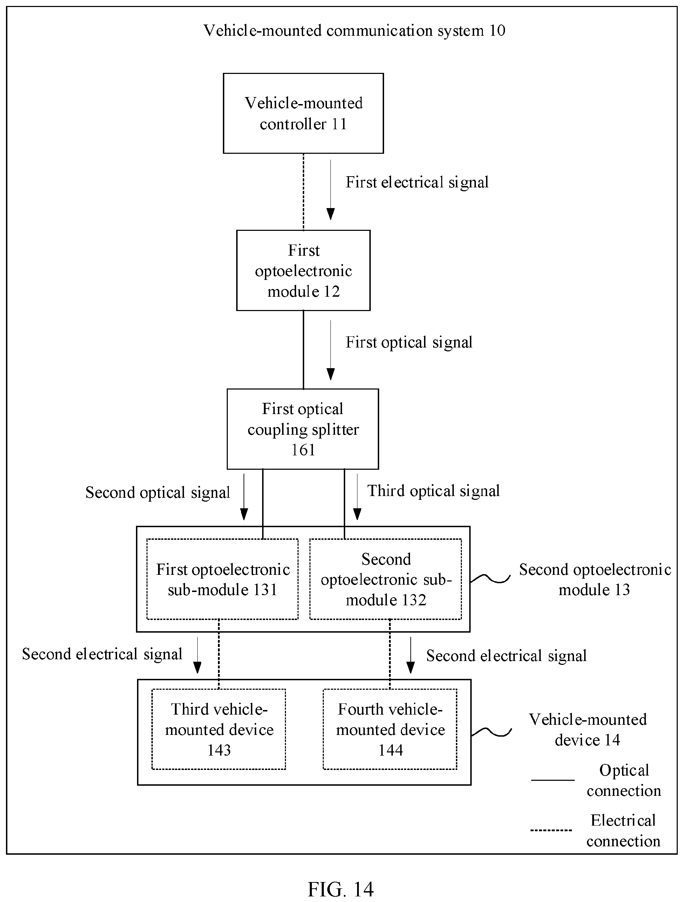

In some implementations, with reference to FIG. 14, FIG. 14 is a diagram of a structure of a vehicle-mounted communication system according to another embodiment of this application. Compared with the vehicle-mounted communication system 10 shown in FIG. 1, in the vehicle-mounted communication system 10 shown in FIG. 14, the second optoelectronic module 13 includes a first optoelectronic sub-module 131 and a second optoelectronic sub-module 132, and the vehicle-mounted device 14 includes a third vehicle-mounted device 143 and a fourth vehicle-mounted device 144. The vehicle-mounted communication system 10 shown in FIG. 14 further includes a first optical coupling splitter 161. The first optical coupling splitter 161 is optically coupled to the first optoelectronic module 12, the first optoelectronic sub-module 131, and the second optoelectronic sub-module 132. The first optoelectronic sub-module 131 is electrically connected to the third vehicle-mounted device 143, and the second optoelectronic sub-module 132 is electrically connected to the fourth vehicle-mounted device 144.

In specification implementation, the first optical coupling splitter 161 may be configured to receive a first optical signal sent by the first optoelectronic module 12, decompose the first optical signal into a second optical signal and a third optical signal, transmit the second optical signal to the first optoelectronic sub-module 131, and transmit the third optical signal to the second optoelectronic sub-module 132. The first optoelectronic sub-module 131 may be configured to perform optoelectronic conversion and protocol conversion on the second optical signal to obtain a second electrical signal, and send the second electrical signal to the third vehicle-mounted device 143. The second optoelectronic sub-module 132 may be configured to perform optoelectronic conversion and protocol conversion on the third optical signal to obtain a second electrical signal, and send the second electrical signal to the fourth vehicle-mounted device 144.

In some implementations, optical energy of the first optical signal may be evenly divided by the first optical coupling splitter 161 to obtain the second optical signal and the third optical signal. The optical energy of the first optical signal may also be allocated by the first optical coupling splitter 161 in any proportion based a requirement to obtain the second optical signal and the third optical signal.

It should be understood that a ratio of the optical energy of the second optical signal to the optical energy of the third optical signal is determined by a splitting ratio of the first optical coupling splitter 161. In some implementations, the splitting ratio of the optical coupling splitter is set before delivery, and the splitting ratio is fixed. For example, the splitting ratio of the optical coupling splitter may be 0%:100%, 50%:50%, or 10%:90%.

In the foregoing implementation, as the vehicle-mounted communication system 10 employs the first optical coupling splitter 161, the number of vehicle harnesses can be significantly reduced, so that structural complexity of the vehicle-mounted communication system 10 is reduced, a communication rate and communication bandwidth of the vehicle-mounted communication system 10 are improved, and applicability and practicality of the vehicle-mounted communication system are improved.

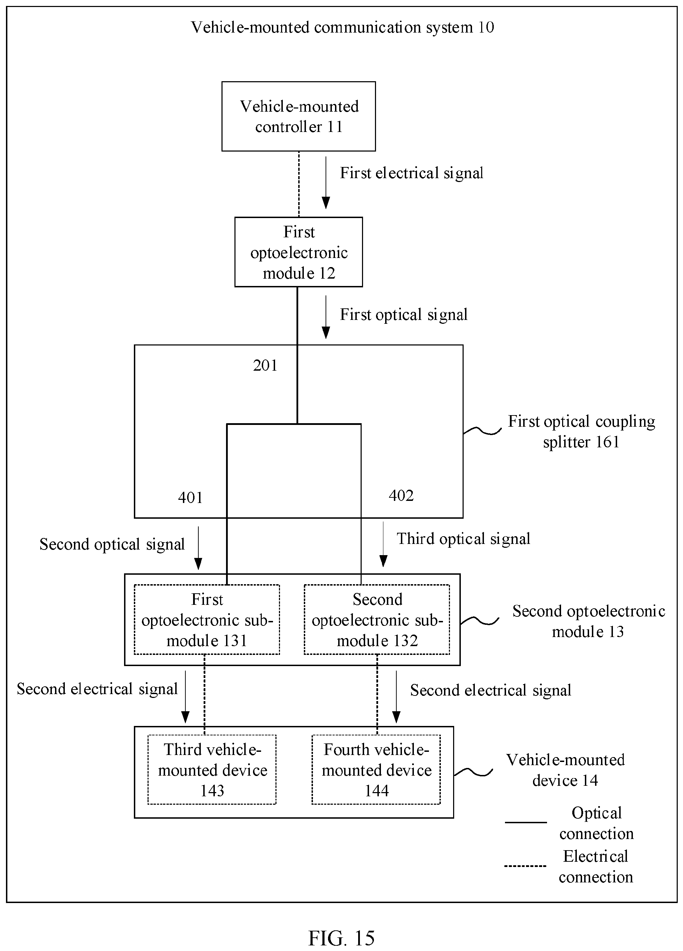

In some implementations, with reference to FIG. 15, FIG. 15 is a diagram of a structure of a vehicle-mounted communication system according to another embodiment of this application. Compared with the vehicle-mounted communication system 10 shown in FIG. 14, in the vehicle-mounted communication system 10 shown in FIG. 15, the first optical coupling splitter 161 includes a port 201, a port 401, and a port 402. The port 201 may be connected to the first optoelectronic module 12 to transmit a first optical signal, the port 401 may be connected to the first optoelectronic sub-module 131 to transmit a second optical signal, and the port 402 may be connected to the second optoelectronic sub-module 132 to transmit a third optical signal.

It should be noted that description is provided herein by using an example in which the first optical coupling splitter 161 is connected to the first optoelectronic sub-module 131 and the second optoelectronic sub-module 132. When the second optoelectronic module 13 connected to the first optical coupling splitter 161 includes N optoelectronic sub-modules, there may be ports 401, 402, ..., and 40N respectively connected to the N photoelectric sub-modules in a one-to-one correspondence.

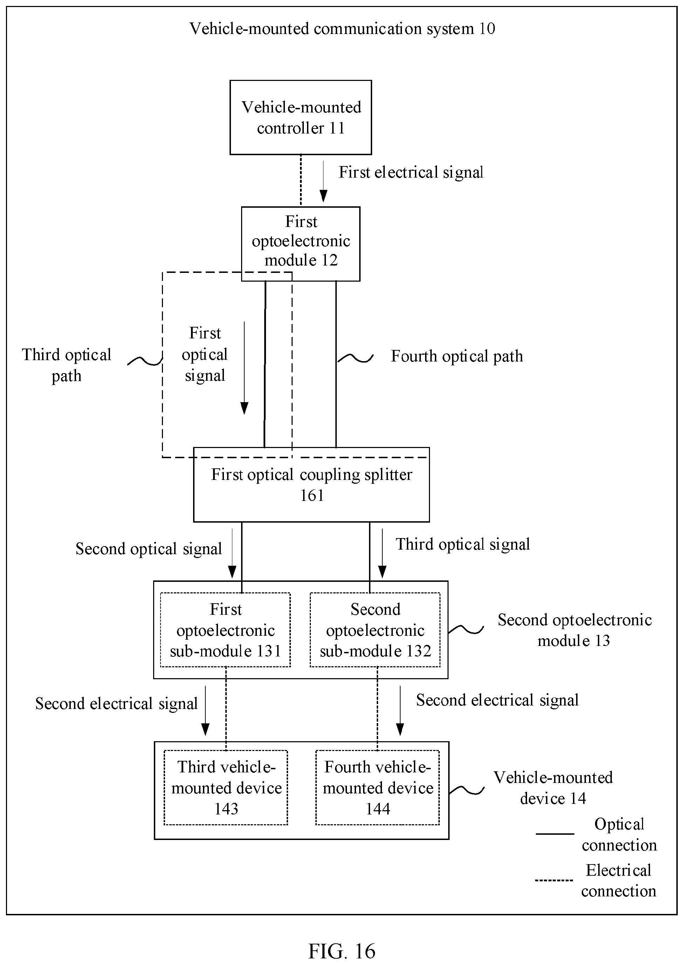

In some implementations, with reference to FIG. 16, FIG. 16 is a diagram of a structure of a vehicle-mounted communication system according to another embodiment of this application. Compared with the vehicle-mounted communication system 10 shown in FIG. 14, the vehicle-mounted communication system 10 shown in FIG. 16 may include a third optical path and a fourth optical path, and each of the third optical path and the fourth optical path may be connected to the first optoelectronic module 12 and the first optical coupling splitter 161.

In specification implementation, the first optoelectronic module 12 may transmit a first optical signal through the third optical path and/or the fourth optical path.

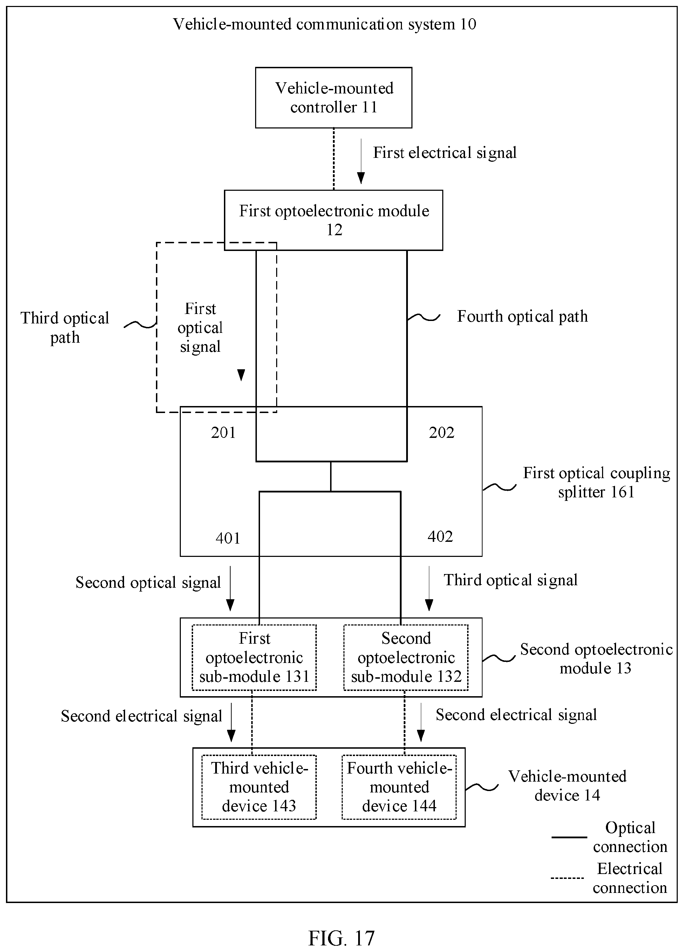

In some implementations, with reference to FIG. 17, FIG. 17 is a diagram of a structure of a vehicle-mounted communication system according to another embodiment of this application. Compared with the vehicle-mounted communication system 10 shown in FIG. 16, in the vehicle-mounted communication system 10 shown in FIG. 17, the first optical coupling splitter 161 includes a port 201, a port 202, a port 401, and a port 402. The port 201 may be connected to the first optoelectronic module 12 to transmit a first optical signal, the port 202 may be connected to the first optoelectronic module 12 to transmit the first optical signal, the port 401 may be connected to the first optoelectronic sub-module 131 to transmit a second optical signal, and the port 402 may be connected to the second optoelectronic sub-module 132 to transmit a third optical signal.

In some implementations, when the third optical path fails, the first optoelectronic module 12 may transmit the first optical signal through the fourth optical path.

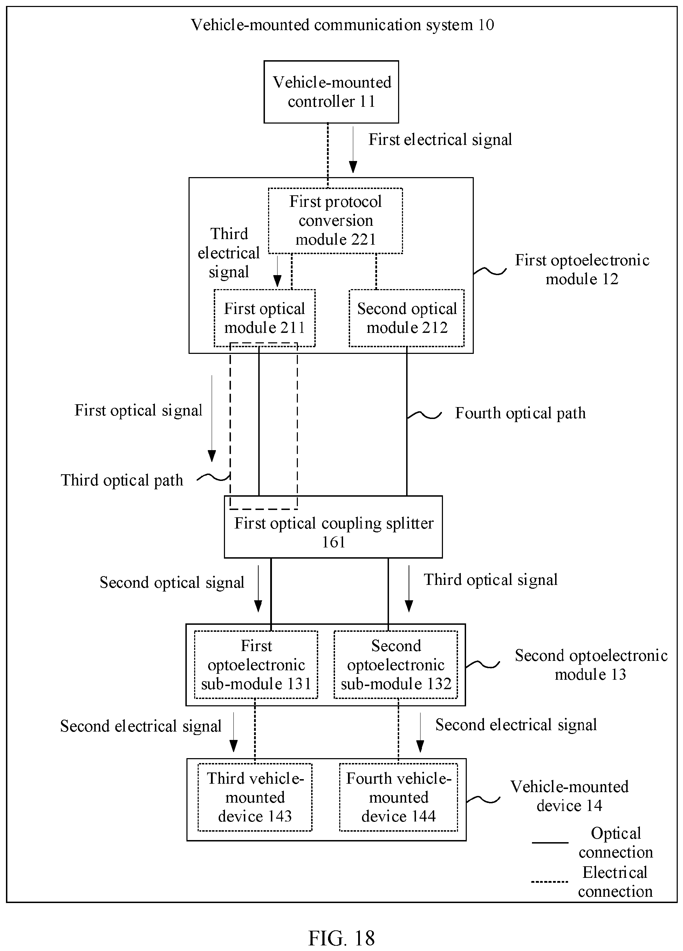

In some implementations, with reference to FIG. 18, FIG. 18 is a diagram of a structure of a vehicle-mounted communication system according to another embodiment of this application. Compared with the vehicle-mounted communication system 10 shown in FIG. 16, in the vehicle-mounted communication system 10 shown in FIG. 18, the first optoelectronic module 12 includes a first optical module 211, a second optical module 212, and a first protocol conversion module 221. The first protocol conversion module 221 may be electrically connected to the first optical module 211 and the second optical module 212 separately.

The third optical path may include the first optical module 211 and the first optical coupling splitter 161. The fourth optical path may include the second optical module 212 and the first optical coupling splitter 161.

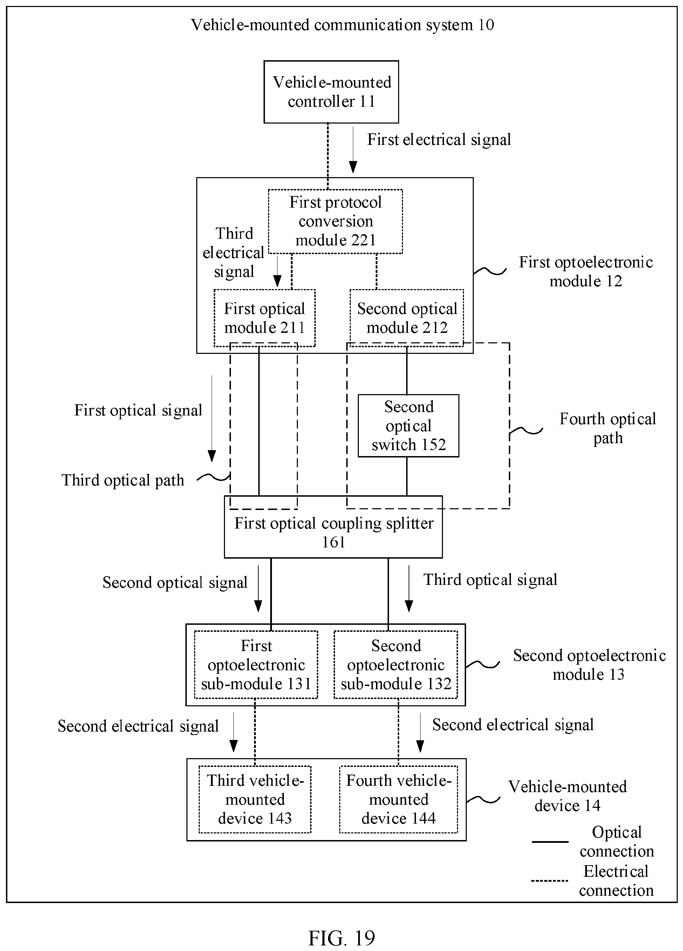

In some implementations, with reference to FIG. 19, FIG. 19 is a diagram of a structure of a vehicle-mounted communication system according to another embodiment of this application. Compared with the vehicle-mounted communication system 10 shown in FIG. 18, the vehicle-mounted communication system 10 shown in FIG. 19 further includes a second optical switch 152 disposed on the fourth optical path. In some implementations, the first optoelectronic module 12 may be optically coupled to the first optical coupling splitter 161 through a waveguide. Specifically, the first optoelectronic module 12 may be optically coupled to the first optical coupling splitter 161 through a fifth waveguide, and the third optical path includes the fifth waveguide. The first optoelectronic module 12 may also be optically coupled to the first optical coupling splitter 161 through a sixth waveguide and a seventh waveguide, and the sixth waveguide and the seventh waveguide may be connected through the second optical switch 152. In this case, the fourth optical path includes the sixth waveguide and the seventh waveguide.

In specification implementation, the second optical switch 152 may be configured to turn on when the third optical path fails, so that the first optoelectronic module 12 transmits a first optical signal through the fourth optical path; and/or the second optical switch 152 may be further configured to turn off when the third optical path is conductive, so that the first optoelectronic module 12 transmits the first optical signal through the third optical path.

Alternatively, upon determining that the third optical path is interrupted, the vehicle-mounted controller 11 may control the second optical switch 152 to turn on, so that the first optoelectronic module 12 and the first optical coupling splitter 161 transmit the first optical signal through the fourth optical path. Upon determining that the third optical path is conductive, the vehicle-mounted controller 11 may control the second optical switch 152 to turn off, so that the first optoelectronic module 12 and the first optical coupling splitter 161 transmit the first optical signal through the third optical path.

In some implementations, after the vehicle-mounted controller 11 sends an electrical signal to the vehicle-mounted device 14 through the third optical path, upon determining that a feedback signal sent by the vehicle-mounted device 14 is not received through the third optical path within preset duration, the vehicle-mounted controller 11 may determine that the third optical path is interrupted. The preset duration may be an empirical value obtained through multiple experiments. In addition, the preset duration may be a factory default of the vehicle-mounted communication system, or may be temporarily configured by an administrator.

It should be understood that the vehicle-mounted communication system 10 preferably transmits the first optical signal by using the third optical path, that is, a primary optical path. When the vehicle-mounted controller 11 determines that the primary optical path is interrupted, the vehicle-mounted controller 11 may switch to the fourth optical path, that is, the standby optical path, to transmit the first optical signal.

In the foregoing implementation, the first optoelectronic module 12 and the first optical coupling splitter 161 may be connected through the third optical path, that is, the primary optical path, or through the fourth optical path, that is, the standby optical path. When determining that the primary optical path is interrupted, the vehicle-mounted controller 11 may control the second optical switch 152 to turn on, so that the vehicle-mounted communication system 10 switches to the standby optical path to transmit the first optical signal, thereby ensuring uninterrupted communication of the vehicle-mounted communication system 10, and improving reliability of the vehicle-mounted communication system 10.

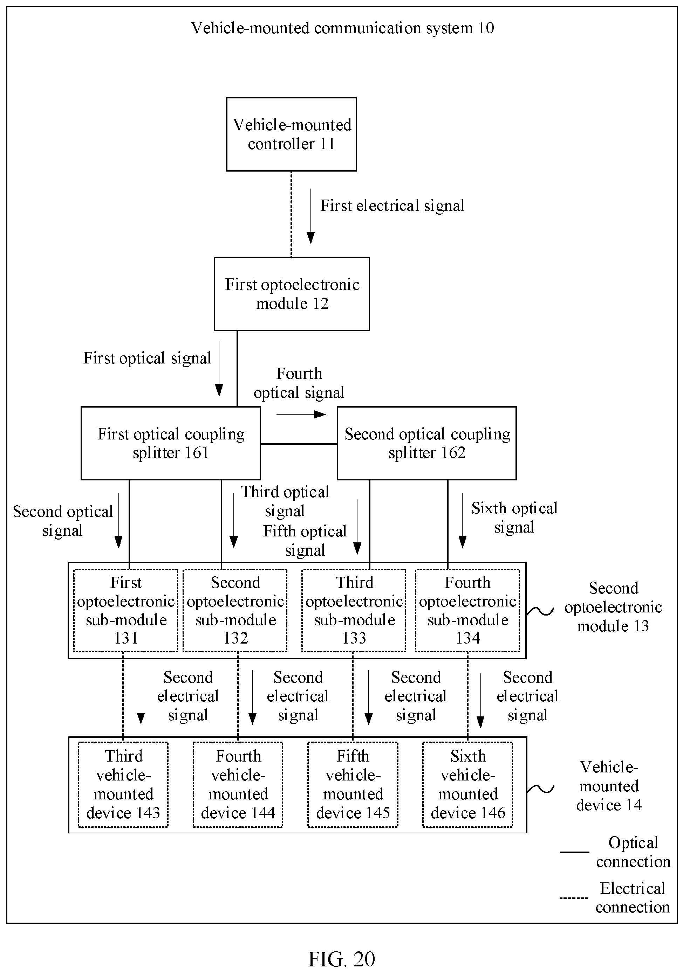

In some implementations, with reference to FIG. 20, FIG. 20 is a diagram of a structure of a vehicle-mounted communication system according to another embodiment of this application. As shown in FIG. 20, the vehicle-mounted communication system 10 includes a vehicle-mounted controller 11, a first optoelectronic module 12, a first optical coupling splitter 161, a second optical coupling splitter 162, a second optoelectronic module 13, and a vehicle-mounted device 14. The second optoelectronic module 13 includes a first optoelectronic sub-module 131, a second optoelectronic sub-module 132, a third optoelectronic sub-module 133, and a fourth optoelectronic sub-module 134. The vehicle-mounted device 14 includes a third vehicle-mounted device 143, a fourth vehicle-mounted device 144, a fifth vehicle-mounted device 145, and a sixth vehicle-mounted device 146. The first optical coupling splitter 161 may be optically coupled to the first optoelectronic module 12, the first optoelectronic sub-module 131, and the second optoelectronic sub-module 132 separately, and the second optical coupling splitter 162 may be optically coupled to the first optical coupling splitter 161, the third optoelectronic sub-module 133, and the fourth optoelectronic sub-module 134 separately. The first optoelectronic sub-module 131 may be electrically connected to the third vehicle-mounted device 143, the second optoelectronic sub-module 132 may be electrically connected to the fourth vehicle-mounted device 144, the third optoelectronic sub-module 133 may be electrically connected to the fifth vehicle-mounted device 145, and the fourth optoelectronic sub-module 134 may be electrically connected to the sixth vehicle-mounted device 146.

In specific implementation, the first optical coupling splitter 161 may be configured to receive a first optical signal sent by the first optoelectronic module 12, decompose the first optical signal into a second optical signal, a third optical signal, and a fourth optical signal, send the second optical signal to the first optoelectronic sub-module 131, send the third optical signal to the second optoelectronic sub-module 132, and send the fourth optical signal to the second optical coupling splitter 162. The second optical coupling splitter 162 may be configured to receive the fourth optical signal sent by the first optical coupling splitter 161, decompose the fourth optical signal into a fifth optical signal and a sixth optical signal, send the fifth optical signal to the third optoelectronic sub-module 133, and send the sixth optical signal to the fourth optoelectronic sub-module 134. The first optoelectronic sub-module 131 may be configured to perform optoelectronic conversion and protocol conversion on the second optical signal to obtain a second electrical signal, and send the second electrical signal to the third vehicle-mounted device 143. The second optoelectronic sub-module 132 may be configured to perform optoelectronic conversion and protocol conversion on the third optical signal to obtain a second electrical signal, and send the second electrical signal to the fourth vehicle-mounted device 144. The third optoelectronic sub-module 133 may be configured to perform optoelectronic conversion and protocol conversion on the fifth optical signal to obtain a second electrical signal, and send the second electrical signal to the fifth vehicle-mounted device 145. The fourth optoelectronic sub-module 134 may perform optoelectronic conversion and protocol conversion on the sixth optical signal to obtain a second electrical signal, and send the second electrical signal to the sixth vehicle-mounted device 146.

It should be noted that a ratio of optical energy of the second optical signal to optical energy of the third optical signal to optical energy of the fourth optical signal may be determined by a splitting ratio of the first optical coupling splitter 161. The ratio of the optical energy of the fifth optical signal to the optical energy of the sixth optical signal may be determined by a splitting ratio of the second optical coupling splitter 162.

It should be noted that the foregoing describes a case in which the vehicle-mounted communication system 10 includes two optical coupling splitters, that is, the first optical coupling splitter 161 and the second optical coupling splitter 162. In practical implementation, the vehicle-mounted communication system 10 may include three or more optical coupling splitters. Specific structures and functions may refer to the foregoing described structures and functions when the vehicle-mounted communication system 10 includes two optical coupling splitters. To avoid redundancy, details are not described herein again. For example, the vehicle-mounted communication system 10 may include 1 to 20 optical coupling splitters.

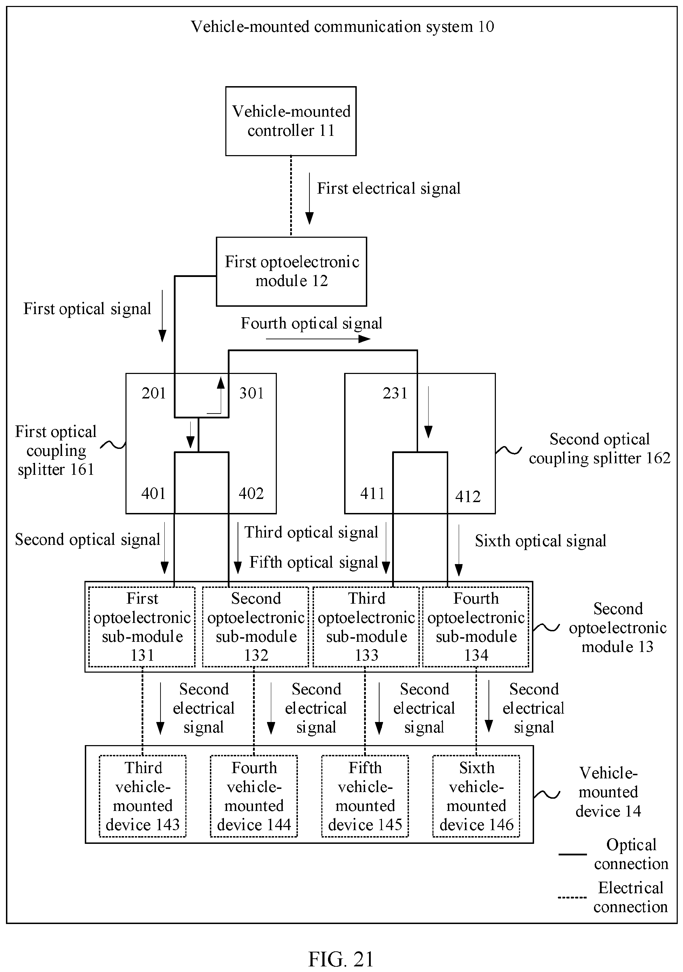

In some implementations, with reference to FIG. 21, FIG. 21 is a diagram of a structure of a vehicle-mounted communication system according to another embodiment of this application. Compared with the vehicle-mounted communication system 10 shown in FIG. 20, in the vehicle-mounted communication system 10 shown in FIG. 21, the first optical coupling splitter 161 includes a port 201, a port 301, a port 401, and a port 402. The second optical coupling splitter 162 includes a port 231, a port 411, and a port 412. The port 201 may be connected to the first optoelectronic module 12 to transmit the first optical signal, and can divide the first optical signal into two parts, where one part is transmitted to the second optical coupling splitter through the port 301, and the other part is divided into two paths and transmitted respectively to the first optoelectronic sub-module 131 and the second optoelectronic sub-module 132 through the port 401 and the port 402. The port 401 may be connected to the first optoelectronic sub-module 131 to transmit the second optical signal. The port 402 may be connected to the second optoelectronic sub-module 132 to transmit the third optical signal. The port 301 may be connected to the port 231 to transmit the fourth optical signal. The port 411 may be connected to the third optoelectronic sub-module 133 to transmit the fifth optical signal. The port 412 may be connected to the fourth optoelectronic sub-module 134 to transmit the sixth optical signal.

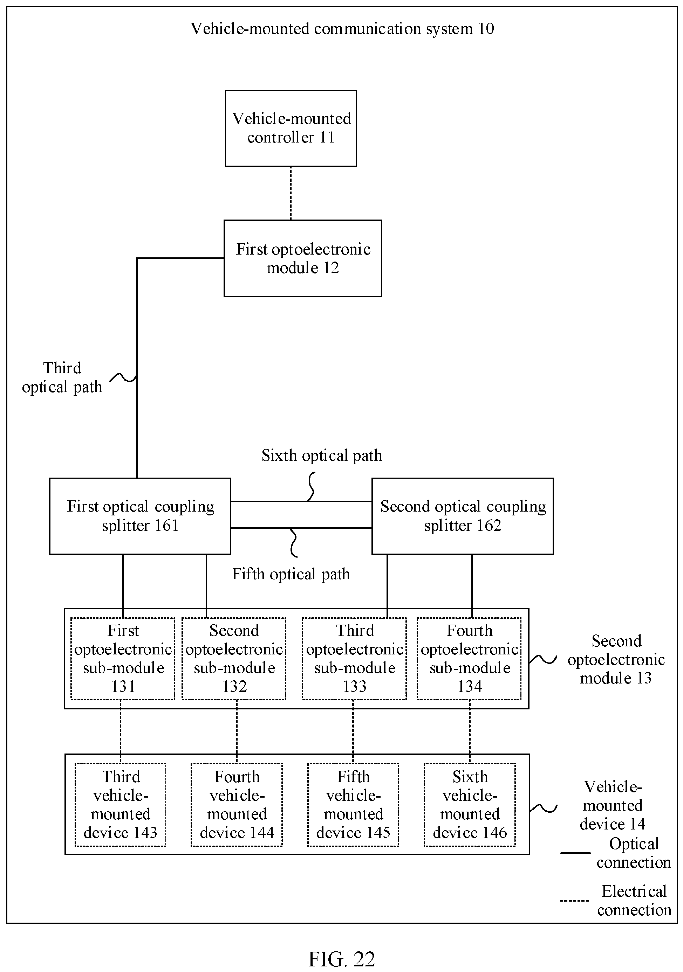

In some implementations, with reference to FIG. 22, FIG. 22 is a diagram of a structure of a vehicle-mounted communication system according to another embodiment of this application. Compared with the vehicle-mounted communication system 10 shown in FIG. 20, the vehicle-mounted communication system 10 shown in FIG. 22 includes a third optical path, a fifth optical path, and a sixth optical path. Both the fifth optical path and the sixth optical path may be connected to the first optical coupling splitter 161 and the second optical coupling splitter 162. It should be noted that the third optical path may be connected to the first optoelectronic module 12 and the first optical coupling splitter 161.

In specific implementation, the first optical coupling splitter 161 may transmit the fourth optical signal through the fifth optical path and/or the sixth optical path.

In some implementations, when the fifth optical path fails, the first optical coupling splitter 161 may transmit the fourth optical signal through the sixth optical path.

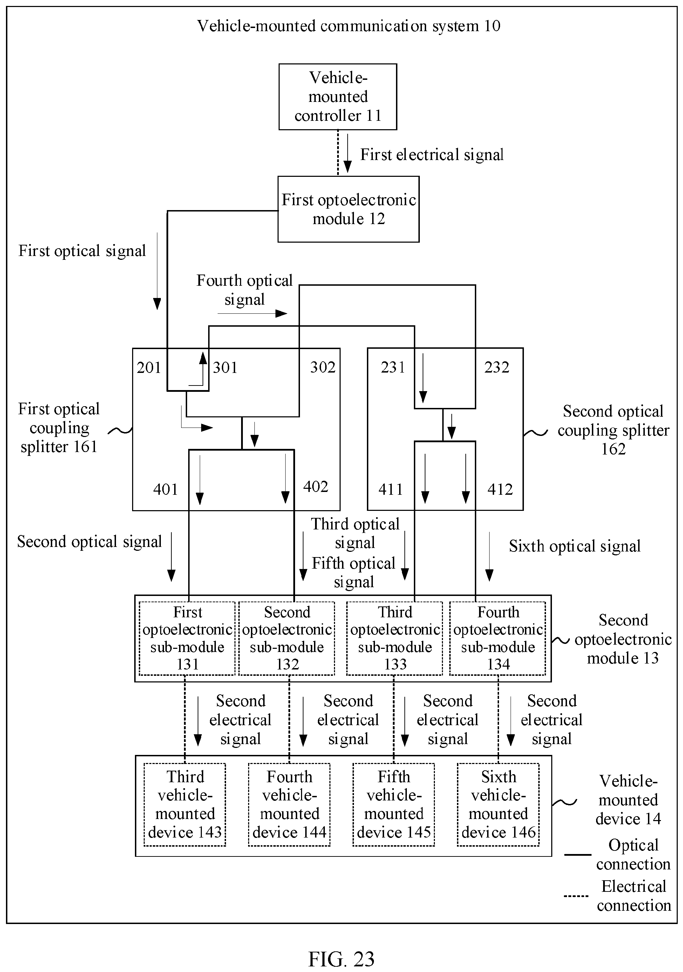

In some implementations, with reference to FIG. 23, FIG. 23 is a diagram of a structure of a vehicle-mounted communication system according to another embodiment of this application. Compared with the vehicle-mounted communication system 10 shown in FIG. 20, in the vehicle-mounted communication system 10 shown in FIG. 23, the first optical coupling splitter 161 includes a port 201, a port 301, a port 302, a port 401, and a port 402. The second optical coupling splitter 162 includes a port 231, a port 232, a port 411, and a port 412. The port 201 may be connected to the first optoelectronic module 12 to transmit the first optical signal, and can divide the first optical signal into two parts, where the one part is transmitted to the second optical coupling splitter 162 through the port 301, and the other part is divided into two paths and transmitted respectively to the first optoelectronic sub-module 131 through the port 401 and the second optoelectronic sub-module 132 through the port 402. The port 401 may be connected to the first optoelectronic sub-module 131 to transmit the second optical signal. The port 402 may be connected to the second optoelectronic sub-module 132 to transmit the third optical signal. The port 301 may be connected to the port 231 to transmit the fourth optical signal. The port 411 may be connected to the third optoelectronic sub-module 133 to transmit the fifth optical signal. The port 412 may be connected to the fourth optoelectronic sub-module 134 to transmit the sixth optical signal.

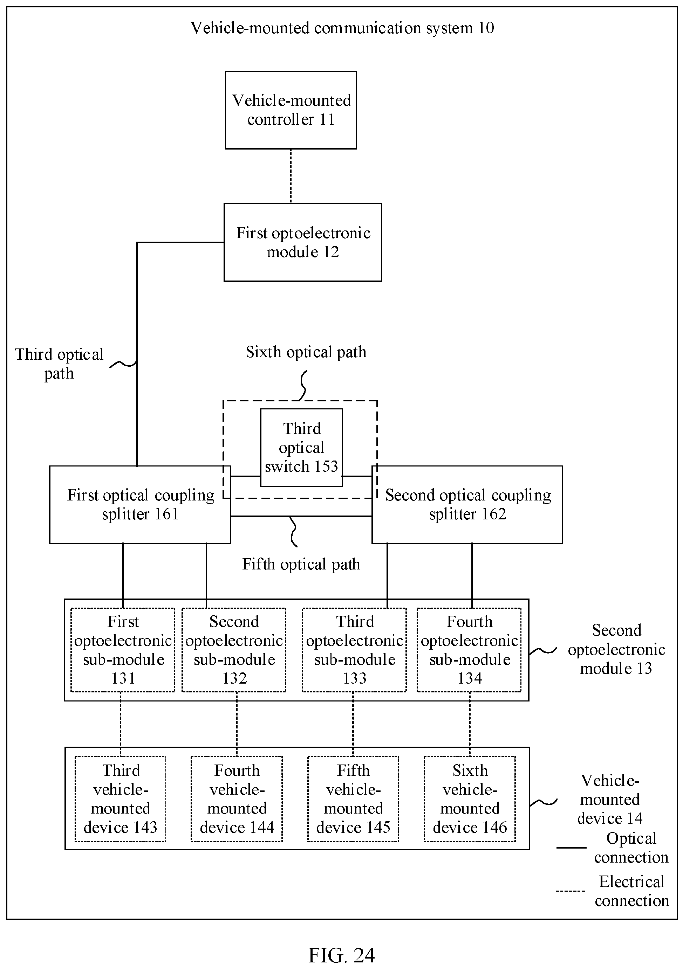

In some implementations, with reference to FIG. 24, FIG. 24 is a diagram of a structure of a vehicle-mounted communication system according to another embodiment of this application. Compared with the vehicle-mounted communication system 10 shown in FIG. 22, the vehicle-mounted communication system 10 shown in FIG. 24 further includes a third optical switch 153 disposed on the sixth optical path.

In specific implementation, the third optical switch 153 may be configured to turn on when the fifth optical path fails, so that the first optical coupling splitter 161 transmits the fourth optical signal through the sixth optical path; and/or the third optical switch 153 may be further configured to turn off when the fifth optical path is conductive, so that the first optical coupling splitter 161 transmits the fourth optical signal through the fifth optical path.

Alternatively, upon determining that the fifth optical path is interrupted, the vehicle-mounted controller 11 may control the third optical switch 153 to turn on, so that the first optoelectronic module 12 and the second optoelectronic module 13 transmit the first optical signal through the third optical path and the sixth optical path. Upon determining that the fifth optical path is conductive, the vehicle-mounted controller 11 may control the third optical switch 153 to turn off, so that the first optoelectronic module 12 and the second optoelectronic module 13 transmit the first optical signal through the third optical path and the fifth optical path.

The third optical path may include the first optoelectronic module 12 and the first optical coupling splitter 161. The fifth optical path may include the first optical coupling splitter 161 and the second optical coupling splitter 162. The sixth optical path may include the first optical coupling splitter 161, the third optical switch 153, and the second optical coupling splitter 162.

It should be understood that the vehicle-mounted communication system 10 preferably transmits the first optical signal by using the fifth optical path, that is, a primary optical path. When the vehicle-mounted controller 11 determines that the primary optical path is interrupted, the vehicle-mounted controller 11 may switch to the sixth optical path, that is, a standby optical path transmission line, to transmit the first optical signal.

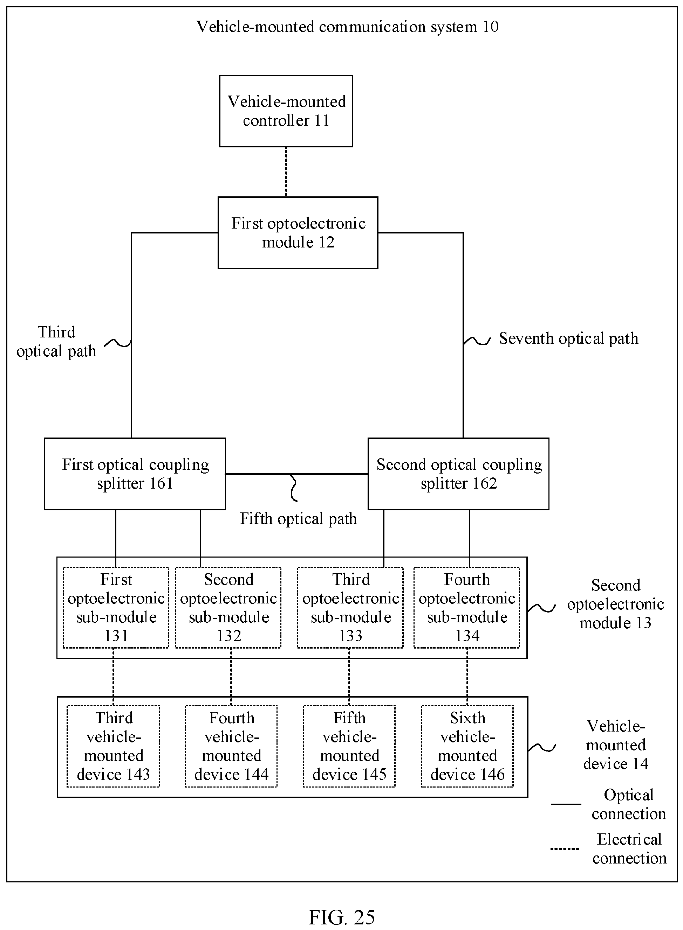

In some implementations, with reference to FIG. 25, FIG. 25 is a diagram of a structure of a vehicle-mounted communication system according to another embodiment of this application. Compared with the vehicle-mounted communication system 10 shown in FIG. 22, the vehicle-mounted communication system 10 shown in FIG. 25 includes the third optical path, the fifth optical path, and a seventh optical path. The seventh optical path may be connected to the first optoelectronic module 12 and the second optical coupling splitter 162. It should be noted that the third optical path may be connected to the first optoelectronic module 12 and the first optical coupling splitter 161, and the fifth optical path may be connected to the first optical coupling splitter 161 and the second optical coupling splitter 162.

In specific implementation, the first optoelectronic module 12 may transmit the first optical signal through the third optical path and/or the seventh optical path.

In some implementations, when the third optical path fails, the first optoelectronic module 12 may transmit the first optical signal through the seventh optical path.

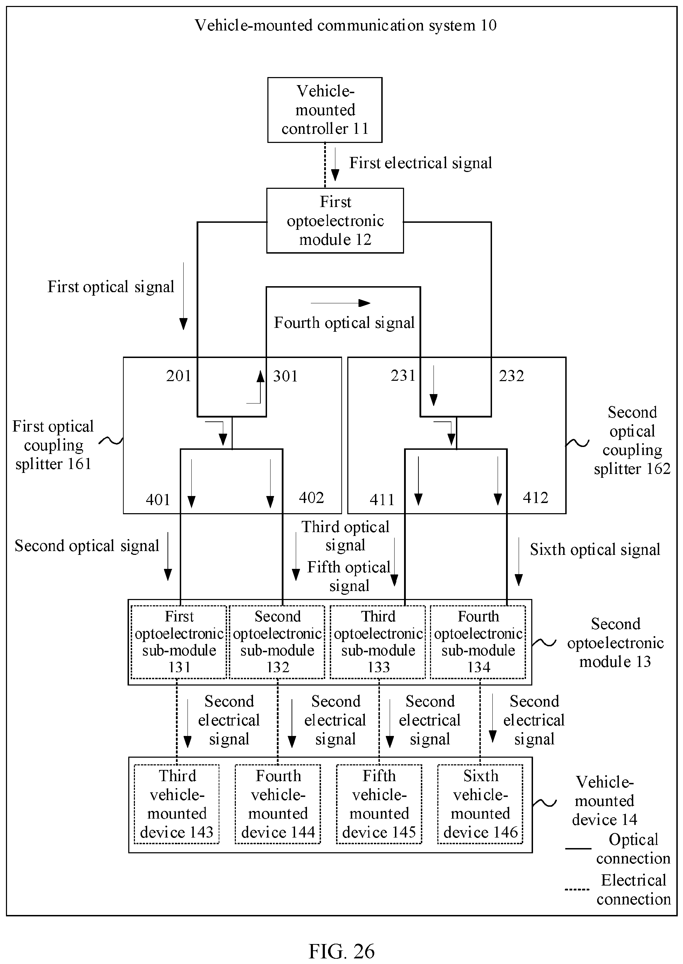

In some implementations, with reference to FIG. 26, FIG. 26 is a diagram of a structure of a vehicle-mounted communication system according to another embodiment of this application. Compared with the vehicle-mounted communication system 10 shown in FIG. 21, in the vehicle-mounted communication system 10 shown in FIG. 26, the first optical coupling splitter 161 includes a port 201, a port 301, a port 401, and a port 402; and the second optical coupling splitter 162 includes a port 231, a port 232, a port 411, and a port 412. The port 201 may be connected to the first optoelectronic module 12 to transmit the first optical signal, and can divide the first optical signal into two parts, where the one part is transmitted to the second optical coupling splitter 162 through the port 301, and the other part is divided into two paths and transmitted respectively to the first optoelectronic sub-module 131 through the port 401 and the second optoelectronic sub-module 132 through the port 402. The port 401 may be connected to the first optoelectronic sub-module 131 to transmit the second optical signal. The port 402 may be connected to the second optoelectronic sub-module 132 to transmit the third optical signal. The port 301 may be connected to the port 231 to transmit the fourth optical signal. The port 411 may be connected to the third optoelectronic sub-module 133 to transmit the fifth optical signal. The port 412 may be connected to the fourth optoelectronic sub-module 134 to transmit the sixth optical signal.

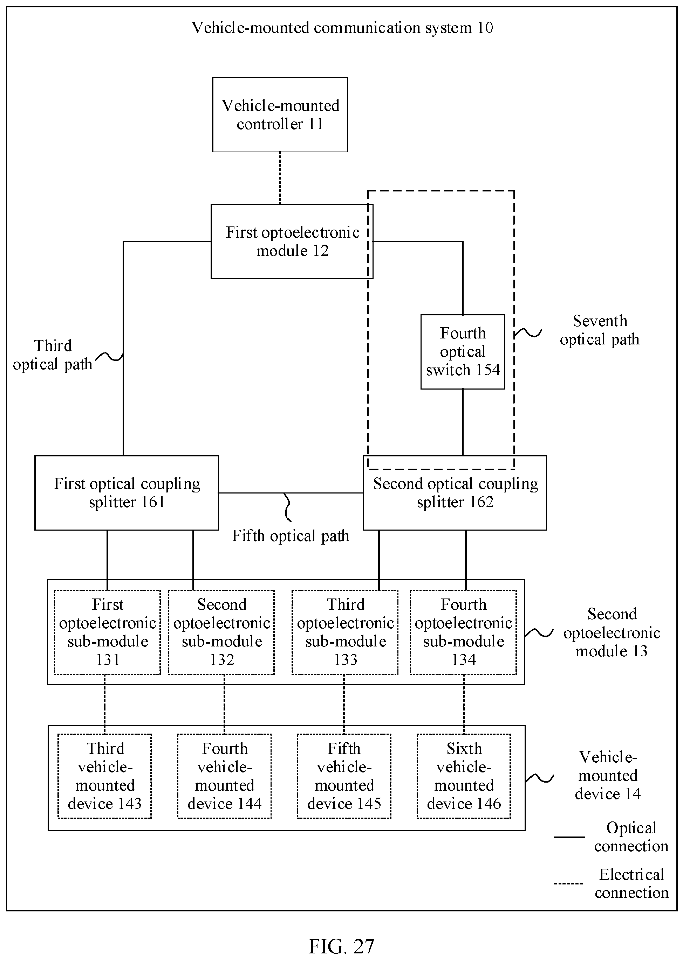

In some implementations, with reference to FIG. 27, FIG. 27 is a diagram of a structure of a vehicle-mounted communication system according to another embodiment of this application. Compared with the vehicle-mounted communication system 10 shown in FIG. 25, the vehicle-mounted communication system 10 shown in FIG. 27 further includes a fourth optical switch 154 disposed on the seventh optical path.

In specific implementation, the fourth optical switch 154 may be configured to turn on when the third optical path fails, so that the first optoelectronic module 12 transmits the first optical signal through the seventh optical path, and/or the fourth optical switch 154 may be further configured to turn off when the third optical path is conductive, so that the first optoelectronic module 12 transmits the first optical signal through the third optical path.

Alternatively, upon determining that the third optical path is interrupted, the vehicle-mounted controller 11 may control the fourth optical switch 154 to turn on, so that the first optoelectronic module 12 and the second optoelectronic module 13 transmit the first optical signal through the fifth optical path and the seventh optical path. Upon determining that the ninth optical path is conductive, the vehicle-mounted controller 11 may control the fourth optical switch 154 to turn off, so that the first optical signal is transmitted between the first optoelectronic module 12 and the second optoelectronic module 13 through the third optical path and the fifth optical path.

The third optical path may include the first optoelectronic module 12 and the first optical coupling splitter 161. The fifth optical path may include the first optical coupling splitter 161 and the second optical coupling splitter 162. The seventh optical path may include the first optoelectronic module 12, the fourth optical switch 154, and the second optical coupling splitter 162.

It should be understood that the vehicle-mounted communication system 10 preferably transmits the first optical signal by using the third optical path, that is, a primary optical path. When the vehicle-mounted controller 11 determines that the primary optical path is interrupted, the vehicle-mounted controller 11 may switch to the seventh optical path, that is, a standby optical path, to transmit the first optical signal.

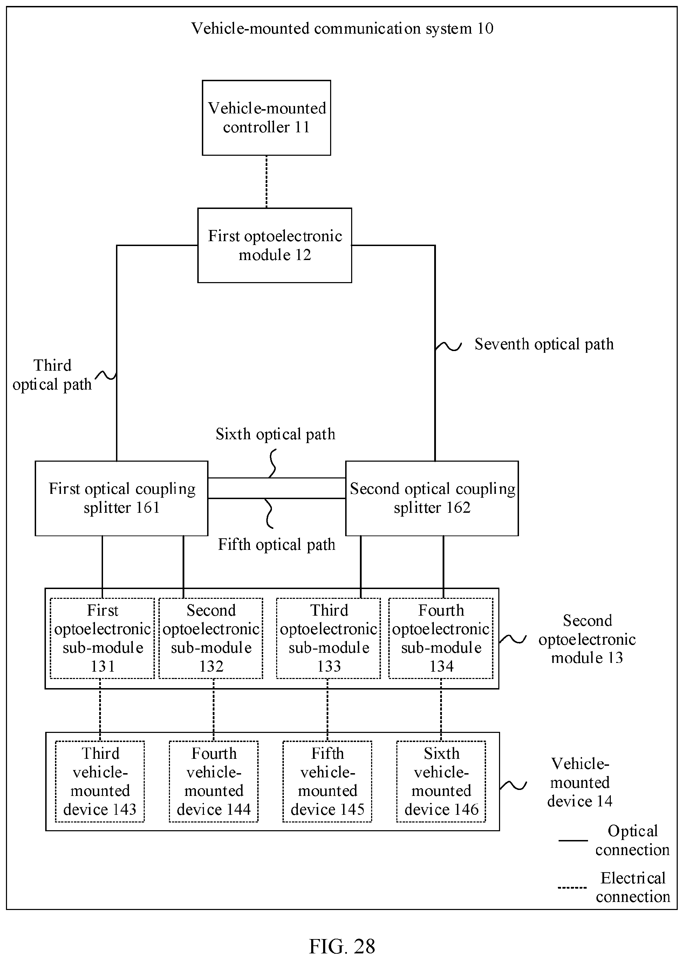

In some implementations, the vehicle-mounted communication system 10 may simultaneously have the sixth optical path and the seventh optical path described above. With reference to FIG. 28, FIG. 28 is a diagram of a structure of a vehicle-mounted communication system according to another embodiment of this application. Compared with the vehicle-mounted communication system 10 shown in FIG. 22, the vehicle-mounted communication system 10 shown in FIG. 28 includes the third optical path, the fifth optical path, the sixth optical path, and the seventh optical path. The third optical path may be connected to the first optoelectronic module 12 and the first optical coupling splitter 161, each of the fifth optical path and the sixth optical path may be connected to the first optical coupling splitter 161 and the second optical coupling splitter 162, and the seventh optical path may be connected to the first optoelectronic module 12 and the second optical coupling splitter 162.

In specific implementation, the first optoelectronic module may transmit the first optical signal through the third optical path and/or the seventh optical path, and through the fifth optical path and/or the sixth optical path.

In some implementations, when the third optical path fails, the first optoelectronic module 12 may transmit the first optical signal through the seventh optical path. When the fifth optical path fails, the first optical coupling splitter 161 may transmit the fourth optical signal through the sixth optical path.

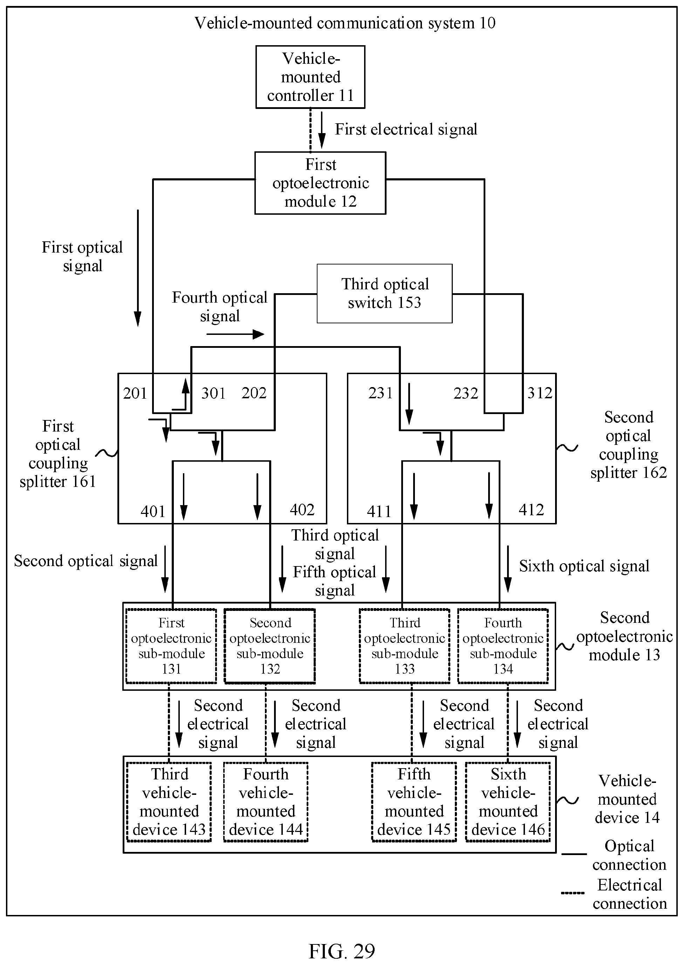

In some implementations, with reference to FIG. 29, FIG. 29 is a diagram of a structure of a vehicle-mounted communication system according to another embodiment of this application. Compared with the vehicle-mounted communication system 10 shown in FIG. 23, in the vehicle-mounted communication system 10 shown in FIG. 29, the first optical coupling splitter 161 includes a port 201, a port 202, a port 301, a port 401, and a port 402. The second optical coupling splitter 162 includes a port 231, a port 232, a port 312, a port 411, and a port 412. The port 201 may be connected to the first optoelectronic module 12 to transmit the first optical signal, and can divide the first optical signal into two parts, where the one part is transmitted to the second optical coupling splitter 162 through the port 301, and the other part is divided into two paths and transmitted respectively to the first optoelectronic sub-module 131 through the port 401 and the second optoelectronic sub-module 132 through the port 402. The port 232 may be connected to the first optoelectronic module 12 to transmit the first optical signal. The port 401 may be connected to the first optoelectronic sub-module 131 to transmit the second optical signal. The port 402 may be connected to the second optoelectronic sub-module 132 to transmit the third optical signal. The port 301 may be connected to the port 231 to transmit the fourth optical signal. The port 312 may be connected to the port 202 through the third optical switch 153 to transmit the fourth optical signal. The port 411 may be connected to the third optoelectronic sub-module 133 to transmit the fifth optical signal. The port 412 may be connected to the fourth optoelectronic sub-module 134 to transmit the sixth optical signal.

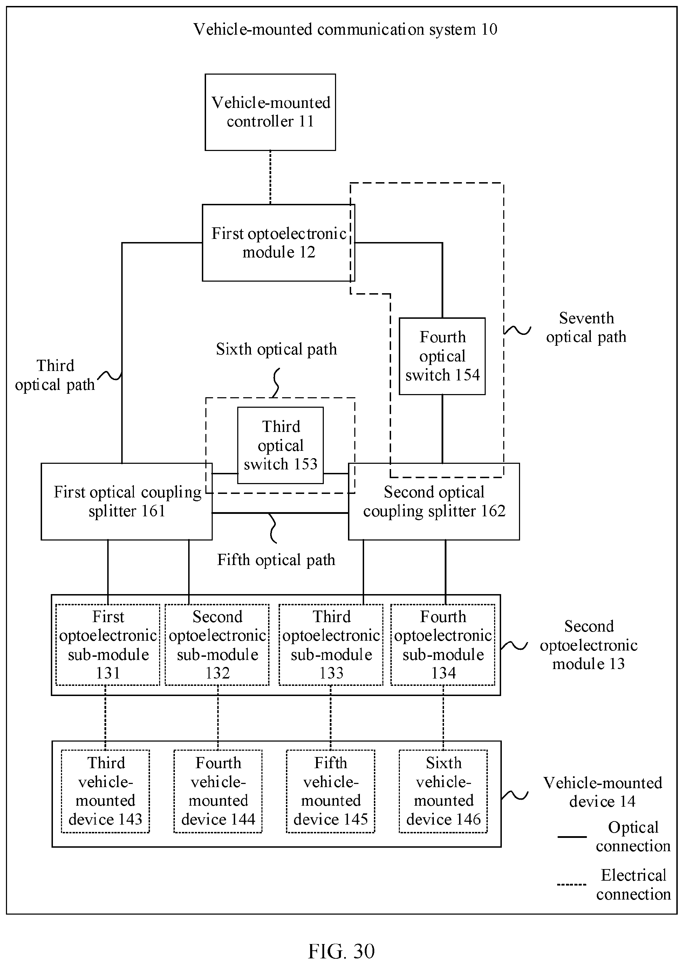

With reference to FIG. 30, FIG. 30 is a diagram of a structure of a vehicle-mounted communication system according to another embodiment of this application. Compared with the vehicle-mounted communication system 10 shown in FIG. 28, the vehicle-mounted communication system 10 shown in FIG. 30 further includes a third optical switch 153 disposed on the sixth optical path and a fourth optical switch 154 disposed on the seventh optical path.

In specific implementation, the third optical switch 153 may be configured to turn on when the fifth optical path fails, so that the first optical coupling splitter 161 transmits the fourth optical signal through the sixth optical path; and/or The third optical switch 153 may be further configured to turn off when the fifth optical path is conductive, so that the first optical coupling splitter 161 transmits the fourth optical signal through the fifth optical path. The fourth optical switch 154 may be configured to turn on when the third optical path fails, so that the first optoelectronic module 12 transmits the first optical signal through the seventh optical path. The fourth optical switch 154 may be further configured to turn off when the third optical path is conductive, so that the first optoelectronic module 12 transmits the first optical signal through the third optical path.

Alternatively, upon determining that the third optical path is interrupted and the fifth optical path is conductive, the vehicle-mounted controller 11 may control the fourth optical switch 154 to turn on, so that the first optoelectronic module 12 and the second optoelectronic module 13 transmit the first optical signal through the seventh optical path and the fifth optical path. In some implementations, upon determining that the third optical path is interrupted, the vehicle-mounted controller 11 may further control the third optical switch 153 to turn on, so that the first optical coupling splitter 161 and the second optoelectronic module 13 may also transmit the first optical signal through the sixth optical path. Upon determining that the third optical path is conductive and the fifth optical path is conductive, the vehicle-mounted controller 11 may control the fourth optical switch 154 to turn off, so that the first optoelectronic module 12 and the second optoelectronic module 13 transmit the first optical signal through the third optical path and the fifth optical path.

Upon determining that the fifth optical path is interrupted and the third optical path is conductive, the vehicle-mounted controller 11 may control the third optical switch 153 to turn on, so that the first optical coupling splitter 161 and the second optoelectronic module 13 transmit the first optical signal through the third optical path and the sixth optical path. Upon determining that the fifth optical path is conductive and the third optical path is conductive, the vehicle-mounted controller 11 may control the third optical switch 153 to turn off, so that the first optical coupling splitter 161 and the second optoelectronic module 13 transmit the first optical signal through the third optical path and the fifth optical path.

Upon determining that both the third optical path and the fifth optical path are interrupted, the vehicle-mounted controller 11 may control the third optical switch 153 to turn on and the fourth optical switch 154 to turn on, so that the first optoelectronic module 12 and the second optoelectronic module 13 transmit the first optical signal through the seventh optical path and the sixth optical path. Upon determining that both the third optical path and the fifth optical path are conductive, the vehicle-mounted controller 11 may control the third optical switch 153 to turn off and the fourth optical switch 154 to turn off, so that the first optoelectronic module 12 and the second optoelectronic module 13 transmit the first optical signal through the third optical path and the fourth optical path.

The third optical path may include the first optoelectronic module 12 and the first optical coupling splitter 161. The fifth optical path may include the first optical coupling splitter 161 and the second optical coupling splitter 162. The sixth optical path may include the first optical coupling splitter 161, the third optical switch 153, and the second optical coupling splitter 162. The seventh optical path may include the first optoelectronic module 12, the fourth optical switch 154, and the second optical coupling splitter 162.

It should be understood that the vehicle-mounted communication system 10 preferably transmits the first optical signal by using the third optical path and the fifth optical path, that is, the primary optical path. When the vehicle-mounted controller 11 determines that the primary optical path is interrupted, the vehicle-mounted controller 11 may switch to the sixth optical path and the seventh optical path, that is, the standby optical path, to transmit the first optical signal.

In the foregoing implementation, the first optoelectronic module 12 and the second optoelectronic module 13 may be connected through the primary optical path including the third optical path and the fifth optical path, or through the standby optical path including the sixth optical path and the seventh optical path. When determining that the primary optical path is interrupted, the vehicle-mounted controller 11 may control the third optical switch 153 and the fourth optical switch 154 to turn on, so that the vehicle-mounted communication system 10 switches to the standby optical path to transmit the first optical signal, thereby ensuring uninterrupted communication of the vehicle-mounted communication system 10, and improving reliability of the vehicle-mounted communication system 10.

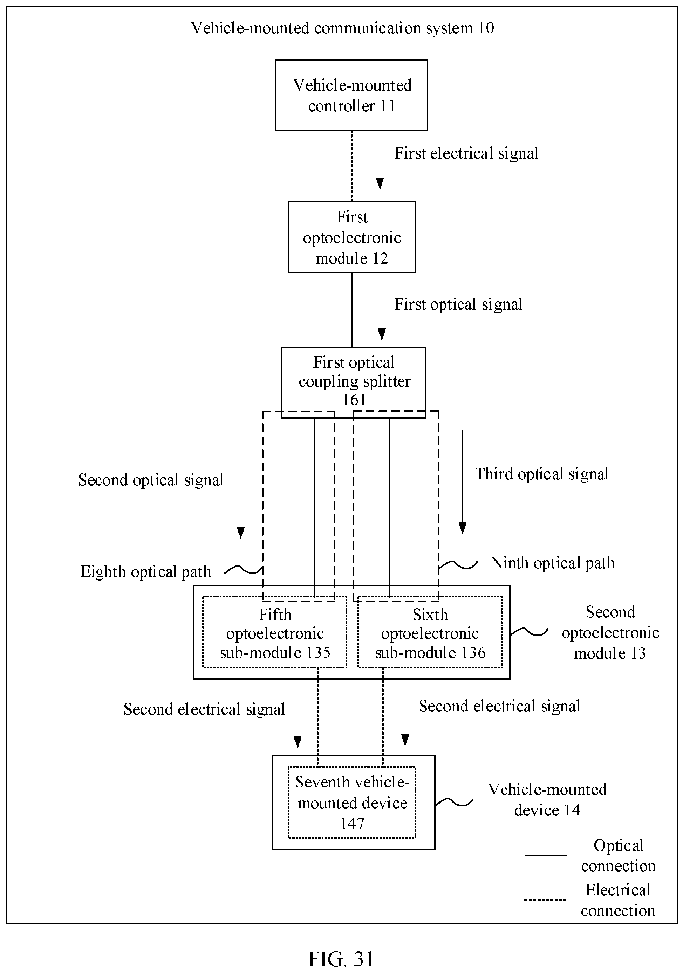

In some implementations, with reference to FIG. 31, FIG. 31 is a diagram of a structure of a vehicle-mounted communication system according to another embodiment of this application. As shown in FIG. 31, the vehicle-mounted communication system 10 includes a vehicle-mounted controller 11, a first optoelectronic module 12, a first optical coupling splitter 161, an eighth optical path, a ninth optical path, a second optoelectronic module 13, and a vehicle-mounted device 14. The vehicle-mounted device 14 includes a seventh vehicle-mounted device 147. The second optoelectronic module 13 includes a fifth optoelectronic sub-module 135 and a sixth optoelectronic sub-module 136. The seventh vehicle-mounted device 147 may be electrically connected to the fifth optoelectronic sub-module 135 and the sixth optoelectronic sub-module 136 separately. The eighth optical path may be connected to the first optical coupling splitter 161 and the fifth optoelectronic sub-module 135, and the ninth optical path may be connected to the first optical coupling splitter 161 and the sixth optoelectronic sub-module 136.

In specific implementation, the first optical coupling splitter 161 may transmit an optical signal through the eighth optical path and/or the ninth optical path. In some implementations, the first optical coupling splitter 161 may decompose a received first optical signal into a second optical signal and a third optical signal. The first optical coupling splitter 161 may transmit the second optical signal through the eighth optical path, and the first optical coupling splitter 161 may transmit the third optical signal through the ninth optical path.

In some implementations, when the eighth optical path fails, the first optical coupling splitter 161 may transmit the optical signal through the ninth optical path.

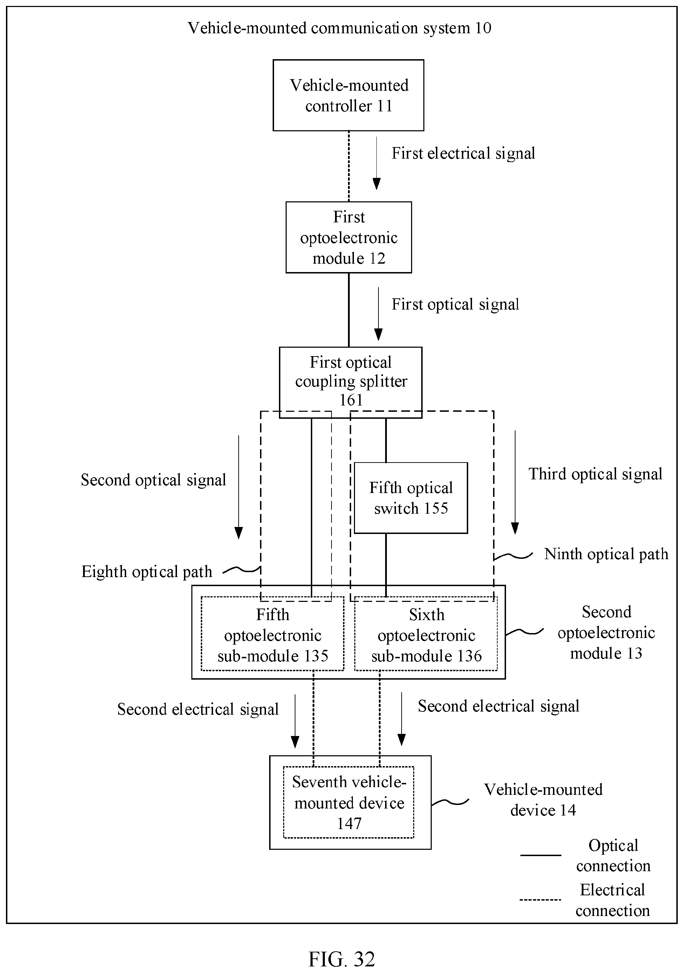

In some implementations, with reference to FIG. 32, FIG. 32 is a diagram of a structure of a vehicle-mounted communication system according to another embodiment of this application. Compared with the vehicle-mounted communication system 10 shown in FIG. 31, the vehicle-mounted communication system 10 shown in FIG. 32 further includes a fifth optical switch 155 disposed on the ninth optical path.

In specific implementation, the fifth optical switch 155 may be configured to turn on when the eighth optical path fails, so that the first optical coupling splitter 161 transmits the optical signal through the ninth optical path. The fifth optical switch 155 may be further configured to turn off when the eighth optical path is conductive, so that the first optical coupling splitter 161 transmits the optical signal through the eighth optical path.

Alternatively, upon determining that the eighth optical path is interrupted, the vehicle-mounted controller 11 may control the fifth optical switch 155 to turn on, so that the first optical coupling splitter 161 and the sixth optoelectronic sub-module 136 transmit the third optical signal through the ninth optical path. The sixth optoelectronic sub-module 136 may be configured to perform optoelectronic conversion and protocol conversion on the third optical signal to obtain a second electrical signal, and send the second electrical signal to the seventh vehicle-mounted device 147. Upon determining that the eighth optical path is conductive, the vehicle-mounted controller 11 may control the fifth optical switch 155 to turn off, so that the first optical coupling splitter 161 and the fifth optoelectronic sub-module 135 transmit the second optical signal through the eighth optical path. The fifth optoelectronic sub-module 135 may be configured to perform optoelectronic conversion and protocol conversion on the second optical signal to obtain a second electrical signal, and send the second electrical signal to the seventh vehicle-mounted device 147.

The eighth optical path may include the first optical coupling splitter 161 and the fifth optoelectronic sub-module 135. The ninth optical path may include the first optical coupling splitter 161, the fifth optical switch 155, and the sixth optoelectronic sub-module 136.

It should be understood that the vehicle-mounted communication system 10 preferably transmits the first optical signal by using the eighth optical path, that is, a primary optical path. When the vehicle-mounted controller 11 determines that the primary optical path is interrupted, the vehicle-mounted controller 11 switches to the ninth optical path, that is, a redundant optical path, to transmit the first optical signal.

In some implementations, in the vehicle-mounted communication system 10, the vehicle-mounted controller 11 and the vehicle-mounted device 14 may implement point-to-multi-point vehicle-mounted communication through the first optoelectronic module 12, the optical coupling splitter, and the second optoelectronic module 13, or may directly implement point-to-point vehicle-mounted communication through the first optoelectronic module 12 and the second optoelectronic module 13. That is, there are a plurality of vehicle-mounted devices included in the vehicle-mounted communication system 10, some vehicle-mounted devices may be connected to the vehicle-mounted controller 11 through the first optoelectronic module 12, the optical coupling splitter, and the second optoelectronic module 13 to transmit a signal, and the other vehicle-mounted devices may be directly connected to the vehicle-mounted controller 11 through the first optoelectronic module 12 and the second optoelectronic module 13 to transmit a signal.

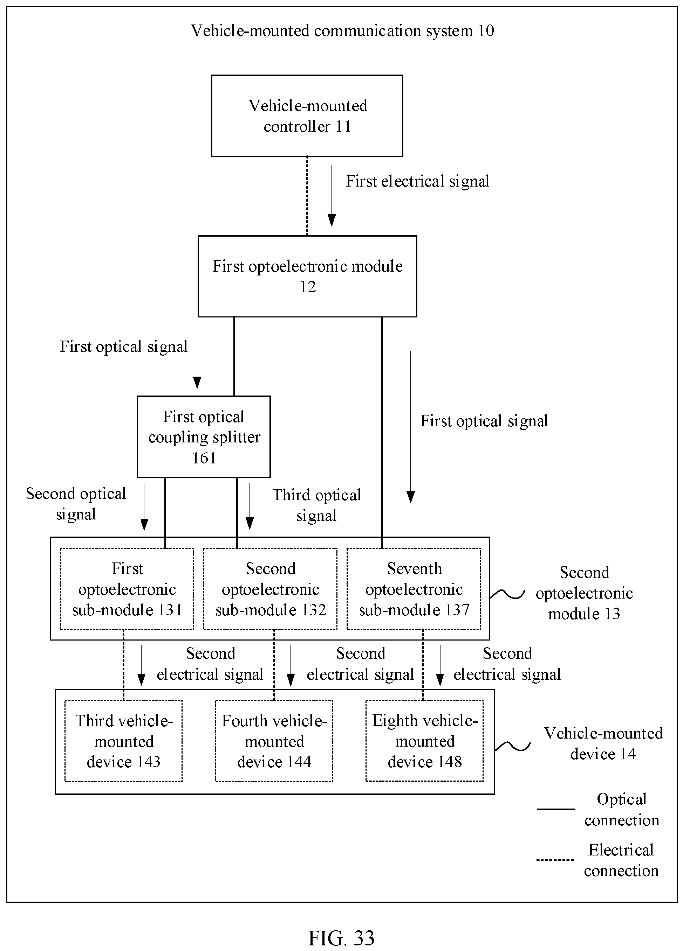

For example, with reference to FIG. 33, FIG. 33 is a diagram of a structure of a vehicle-mounted communication system according to another embodiment of this application. As shown in FIG. 33, the vehicle-mounted communication system 10 includes a vehicle-mounted controller 11, a first optoelectronic module 12, a first optical coupling splitter 161, a second optoelectronic module 13, and a vehicle-mounted device 14. The second optoelectronic module 13 includes a first optoelectronic sub-module 131, a second optoelectronic sub-module 132, and a seventh optoelectronic sub-module 137. The vehicle-mounted device 14 includes a third vehicle-mounted device 143, a fourth vehicle-mounted device 144, and an eighth vehicle-mounted device 148. The seventh optoelectronic sub-module 137 may be optically coupled to the first optoelectronic module 12, and the seventh optoelectronic sub-module 137 may be electrically connected to the eighth vehicle-mounted device 148.

In specific implementation, the first optoelectronic module 12 may be configured to receive an electrical signal that is sent by the vehicle-mounted controller 11 and that meets a first communication protocol, perform electro-optical conversion and protocol conversion on the first electrical signal to obtain a first optical signal that meets a second communication protocol, and send the first optical signal to the first optical coupling splitter 161 and the seventh optoelectronic sub-module 137 separately. The seventh optoelectronic sub-module 137 may perform optoelectronic conversion and protocol conversion on the first optical signal to obtain a second electrical signal that meets the first communication protocol, and send the second electrical signal to the eighth vehicle-mounted device 148. The first optical coupling splitter 161 may be configured to decompose the first optical signal to obtain a second optical signal and a third optical signal, send the second optical signal to the first optoelectronic sub-module 131 and send the third optical signal to the second optoelectronic sub-module 132. The first optoelectronic sub-module 131 may perform optoelectronic conversion and protocol conversion on the second optical signal to obtain a second electrical signal that meets the first communication protocol, and send the second electrical signal to the third vehicle-mounted device 143. The second optoelectronic sub-module 132 may perform optoelectronic conversion and protocol conversion on the third optical signal to obtain a second electrical signal that meets the first communication protocol, and send the second electrical signal to the fourth vehicle-mounted device 144.

It should be noted that the foregoing describes a case in which the vehicle-mounted communication system 10 includes two optical coupling splitters, that is, the first optical coupling splitter 161 and the second optical coupling splitter 162. In practical implementation, the vehicle-mounted communication system 10 may include three or more optical coupling splitters. Specific structures and functions may refer to the foregoing described structures and functions when the vehicle-mounted communication system 10 includes two optical coupling splitters. To avoid redundancy, details are not described herein again. For example, the vehicle-mounted communication system 10 may include 1 to 20 optical coupling splitters.

It should be noted that the foregoing describes a case in which one optical coupling splitter exists in the vehicle-mounted communication system 10, and one vehicle-mounted device is directly connected to the vehicle-mounted controller 11 through the first optoelectronic module 12 and the second optoelectronic module 13 to transmit a signal. In practical implementation, the vehicle-mounted communication system 10 may further include two or more optical coupling splitters, and a plurality of vehicle-mounted devices may be directly connected to the vehicle-mounted controller 11 through the first optoelectronic module 12 and the second optoelectronic module 13 to transmit a signal.

In the foregoing implementation, the vehicle-mounted controller 11 and the vehicle-mounted device 14 may implement point-to-multi-point communication in the vehicle-mounted communication system through an optical coupling splitter, or may directly implement point-to-point communication in the vehicle-mounted communication system through an optoelectronic module, thereby improving a communication rate and a communication bandwidth, and reducing structural complexity of the vehicle-mounted communication system.

In this embodiment of this application, the vehicle-mounted communication system 10 may be optically coupled through a waveguide. In some implementations, the waveguide may be an optical fiber, and may be configured to transmit a first optical signal. For example, the optical fiber may be a special optoelectronic composite cable, which may provide both a communication function and a power supply function in the vehicle-mounted communication system 10. The optical fiber may be a single-mode optical fiber, a multi-mode optical fiber, a plastic optical fiber, or the like. An implementation form of the waveguide is not specifically limited in this embodiment of this application.

In this embodiment of this application, the optoelectronic module, the optical coupling splitter, the optical switch, the controllable switch, and the like may be controlled by the vehicle-mounted controller 11, or by another controller. This is not specifically limited in this embodiment of this application.

In this embodiment of this application, the vehicle-mounted communication system 10 may be electrically connected through a line. In some implementations, the line may be a circuit integrated on a circuit board or a communication cable. An implementation form of the line is not specifically limited in this embodiment of this application.

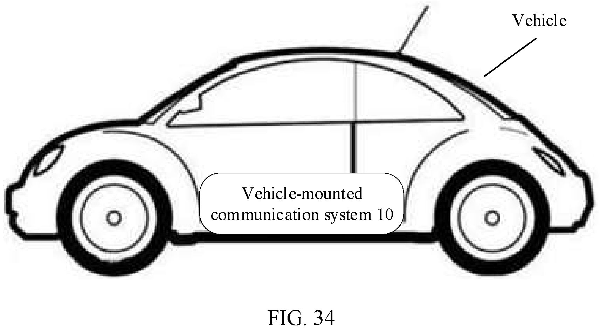

An embodiment of this application further provides a vehicle, with reference to FIG. 34, FIG. 34 is a diagram of a structure of a vehicle according to an embodiment of this application. As shown in FIG. 34, the vehicle may include the vehicle-mounted communication system 10 described in the foregoing embodiment. The vehicle may also include a plurality of wheels, seats, vehicle-mounted power supplies, electrical devices, and the like.

It should be noted that for any of the foregoing embodiments of the vehicle-mounted communication system and the vehicle, the description is presented as a series of actions for simplicity. However, those skilled in the art may appreciate that this application is not limited to the order of actions described herein, this is because, in accordance with this application, specific operations may be performed in other orders or concurrently. In addition, persons skilled in the art should also understand that embodiments described in the specification are all exemplary embodiments, and involved actions are not necessarily necessary for this application.

The terms "first", "second", and the like in the specification, claims, and the accompanying drawings of this application are used to distinguish different objects, rather than describing a specific sequence. In addition, the terms "including" and "having" and any variations thereof are intended to cover non-exclusive inclusions. For example, a process, method, system, product, or device including a series of operations is not limited to the listed operations, it may optionally include other operations that are not listed, or optionally include other operations inherent to the process, method, product, or device.

The "embodiment" referred to herein means that a particular feature, structure, or feature described in conjunction with the embodiment may be contained in at least one embodiment of this application. The appearance of the term in various places in this specification does not necessarily mean a same embodiment, nor an independent or alternative embodiment that is mutually exclusive from other embodiments. It is explicitly and implicitly understood by those skilled in the art that the embodiments described herein may be combined with other embodiments.

Although this application is described here with reference to embodiments, in a process of implementing this application as claimed, those skilled in the art may, upon review of the accompanying drawings, the disclosure, and the appended claims, understand and implement other variations of the disclosed embodiments. In the claims, the word "comprising" does not exclude other constituting parts or operations, and "a" or "one" does not exclude a plurality. Some measures are recited in mutually different dependent claims, but this does not mean that these measures cannot be combined to produce a good effect.

The embodiments of this application are described in detail above. In this specification, a principle and an implementation of a vehicle-mounted communication system and a vehicle provided by this application are described by using specific examples. The description of the foregoing embodiments indicates a method and a core idea that are used to help understand this application. In addition, for those of ordinary skill in the art, changes may be made in specific implementations and application scopes based on the idea of the in-vehicle communication system and the vehicle according to this application. In summary, the contents of this specification shall not be construed as limiting this application.

Those skilled in the art should be aware that, in the foregoing one or more examples, a function described in this application may be implemented by using hardware, software, firmware, or any combination thereof. When the functions are implemented by means of software, these functions may be stored in a computer-readable medium or transmitted as one or more instructions or code on the computer-readable medium. The computer-readable medium includes a computer storage medium and a communication medium, where the communication medium includes any medium that facilitates the transfer of a computer program from one place to another. The storage medium may be any available medium accessible to a general purpose or dedicated computer.

The specific implementations described above further describe the objectives, technical solutions, and beneficial effects of this application in detail. It should be understood that the foregoing description is merely specific implementations of this application, and is not intended to limit the scope of protection of this application. Any modification, equivalent replacement, improvement, and the like made on the basis of the technical solutions of this application shall be included in the scope of protection of this application.

## Claims

1. A vehicle-mounted communication system (10), comprising a vehicle-mounted controller (11), a first optoelectronic module (12), a second optoelectronic module (13), and a vehicle-mounted device (14), wherein the vehicle-mounted controller and the vehicle-mounted device are connected through the first optoelectronic module and the second optoelectronic module;
the vehicle-mounted controller is configured to send a first electrical signal to the first optoelectronic module;
the first optoelectronic module is configured to perform protocol conversion and optoelectronic conversion on the first electrical signal to obtain a first optical signal, and send the first optical signal to the second optoelectronic module; and
the second optoelectronic module is configured to perform optoelectronic conversion and protocol conversion on the first optical signal to obtain a second electrical signal, and send the second electrical signal to the vehicle-mounted device.

2. The vehicle-mounted communication system according to claim 1, wherein the first electrical signal carries target data, and the second electrical signal carries the target data.

3. The vehicle-mounted communication system according to claim 1, wherein the first optical signal is an optical signal that meets a second communication protocol and that is obtained by performing, by the first optoelectronic module, protocol conversion on the first electrical signal that meets a first communication protocol to obtain a third electrical signal that meets the second communication protocol and performing electro-optical conversion on the third electrical signal that meets the second communication protocol, wherein the first communication protocol is a communication transmission protocol set between the vehicle-mounted controller and the vehicle-mounted device, and the second communication protocol is a communication transmission protocol set between the first optoelectronic module and the second optoelectronic module.

4. The vehicle-mounted communication system according to claim 3, wherein the second electrical signal is an electrical signal that meets the first communication protocol and that is obtained by performing, by the second optoelectronic module, optoelectronic conversion on the first optical signal to obtain a fourth electrical signal that meets the second communication protocol and performing protocol conversion on the fourth electrical signal that meets the second communication protocol.

5. The vehicle-mounted communication system according to any one of claims 1 to 4, wherein at least one of the first optoelectronic module and the second optoelectronic module comprises an optical module (21) and a protocol conversion module (22) electrically connected to the optical module;
the protocol conversion module of the first optoelectronic module is configured to convert a received electrical signal that meets the first communication protocol into an electrical signal that meets the second communication protocol; and the optical module of the first optoelectronic module is configured to convert a received electrical signal that meets the second communication protocol into an optical signal that meets the second communication protocol, and output the optical signal; and
the optical module of the second optoelectronic module is configured to convert a received optical signal that meets the second communication protocol into an electrical signal that meets the second communication protocol, and output the electrical signal; and the protocol conversion module of the second optoelectronic module is configured to convert a received electrical signal that meets the second communication protocol into an electrical signal that meets the first communication protocol.

6. The vehicle-mounted communication system according to any one of claims 1 to 4, wherein the vehicle-mounted communication system further comprises a third optoelectronic module (17);
the vehicle-mounted controller is configured to: when communication between the vehicle-mounted controller and the first optoelectronic module fails, electrically connect to the third optoelectronic module, and send the first electrical signal to the third optoelectronic module; and
the third optoelectronic module is configured to: when the communication between the vehicle-mounted controller and the first optoelectronic module fails, perform protocol conversion and optoelectronic conversion on the received first electrical signal to obtain the first optical signal, and send the first optical signal to the second optoelectronic module.

7. The vehicle-mounted communication system according to claim 6, wherein the vehicle-mounted communication system further comprises a first controllable switch component (181);
the first controllable switch component is configured to: when the communication between the vehicle-mounted controller and the first optoelectronic module fails, establish an electrical connection between the vehicle-mounted controller and the third optoelectronic module, so that the vehicle-mounted controller sends the first electrical signal to the third optoelectronic module; and
the first controllable switch component is further configured to: when the communication between the vehicle-mounted controller and the first optoelectronic module is normal, disconnect the electrical connection between the vehicle-mounted controller and the third optoelectronic module, so that the vehicle-mounted controller sends the first electrical signal to the first optoelectronic module.

8. The vehicle-mounted communication system according to any one of claims 1 to 5, wherein the vehicle-mounted communication system further comprises a first optical path and a second optical path, and each of the first optical path and the second optical path is connected to the first optoelectronic module and the second optoelectronic module; and
the first optoelectronic module transmits the first optical signal through at least one of the first optical path or the second optical path.

9. The vehicle-mounted communication system according to claim 8, wherein when the first optical path fails, the first optoelectronic module is configured to transmit the first optical signal through the second optical path.

10. The vehicle-mounted communication system according to claim 8, wherein the first optoelectronic module comprises a first optical module (211), a second optical module (212), and a first protocol conversion module (221); the second optoelectronic module comprises a third optical module (213), a fourth optical module (214), and a second protocol conversion module (222); the first protocol conversion module is electrically connected to the first optical module and the second optical module separately; and the second protocol conversion module is electrically connected to the third optical module and the fourth optical module separately;
the first optical path comprises the first optical module and the third optical module; and
the second optical path comprises the second optical module and the fourth optical module.

11. The vehicle-mounted communication system according to claim 10, wherein the vehicle-mounted communication system further comprises a first optical switch (151) disposed on the second optical path;
the first optical switch is configured to turn on when the first optical path fails, so that the first optoelectronic module transmits the first optical signal through the second optical path; and
the first optical switch is further configured to turn off when first optical path is conductive, so that the first optoelectronic module transmits the first optical signal through the first optical path.

12. The vehicle-mounted communication system according to claim 10, wherein the vehicle-mounted communication system further comprises a second controllable switch component (182) disposed between the first protocol conversion module and the second optical module;
the second controllable switch component is configured to turn on when the first optical path fails, so that the first optoelectronic module transmits the first optical signal through the second optical path; and
the second controllable switch component is further configured to turn off when the first optical path is conductive, so that the first optoelectronic module transmits the first optical signal through the first optical path.

13. The vehicle-mounted communication system according to any one of claims 10 to 12, wherein the vehicle-mounted device comprises a first vehicle-mounted device (141) and a second vehicle-mounted device (142); the second optoelectronic module is electrically connected to the first vehicle-mounted device and the second vehicle-mounted device separately; and the second optoelectronic module is further configured to send the second electrical signal to the first vehicle-mounted device and the second vehicle-mounted device separately.

14. The vehicle-mounted communication system according to any one of claims 1 to 5, wherein the vehicle-mounted communication system further comprises a first optical coupling splitter (161); the second optoelectronic module comprises a first optoelectronic sub-module (131) and a second optoelectronic sub-module (132); the vehicle-mounted device comprises a third vehicle-mounted device (143) and a fourth vehicle-mounted device (144); and the first optical coupling splitter is optically coupled to the first optoelectronic module, the first optoelectronic sub-module, and the second optoelectronic sub-module separately, the first optoelectronic sub-module is electrically connected to the third vehicle-mounted device, and the second optoelectronic sub-module is electrically connected to the fourth vehicle-mounted device;
the first optical coupling splitter is configured to receive the first optical signal, decompose the first optical signal into a second optical signal and a third optical signal, transmit the second optical signal to the first optoelectronic sub-module, and transmit the third optical signal to the second optoelectronic sub-module;
the first optoelectronic sub-module is configured to perform optoelectronic conversion and protocol conversion on the second optical signal to obtain the second electrical signal, and send the second electrical signal to the third vehicle-mounted device; and
the second optoelectronic sub-module is configured to perform optoelectronic conversion and protocol conversion on the third optical signal to obtain the second electrical signal, and send the second electrical signal to the fourth vehicle-mounted device.

15. The vehicle-mounted communication system according to claim 14, wherein the vehicle-mounted communication system further comprises a third optical path and a fourth optical path, and each of the third optical path and the fourth optical path is connected to the first optoelectronic module and the first optical coupling splitter; and
the first optoelectronic module transmits the first optical signal through at least one of the third optical path or the fourth optical path.

16. The vehicle-mounted communication system according to claim 15, wherein when the third optical path fails, the first optoelectronic module transmits the first optical signal through the fourth optical path.

17. The vehicle-mounted communication system according to claim 15, wherein the first optoelectronic module comprises a first optical module (211), a second optical module (212), and a first protocol conversion module (221); and the first protocol conversion module is electrically connected to the first optical module and the second optical module separately;
the third optical path comprises the first optical module and the first optical coupling splitter; and
the fourth optical path comprises the second optical module and the first optical coupling splitter.

18. The vehicle-mounted communication system according to claim 17, wherein the vehicle-mounted communication system further comprises a second optical switch (152) disposed on the fourth optical path;
the second optical switch is configured to turn on when the third optical path fails, so that the first optoelectronic module transmits the first optical signal through the fourth optical path; and
the second optical switch is further configured to turn off when the third optical path is conductive, so that the first optoelectronic module transmits the first optical signal through the third optical path.

19. The vehicle-mounted communication system according to claim 14, wherein the vehicle-mounted communication system further comprises a second optical coupling splitter (162); the second optoelectronic module further comprises a third optoelectronic sub-module (133) and a fourth optoelectronic sub-module (134); the vehicle-mounted device further comprises a fifth vehicle-mounted device (145) and a sixth vehicle-mounted device (146); and the second optical coupling splitter is optically coupled to the first optical coupling splitter, the third optoelectronic sub-module, and the fourth optoelectronic sub-module separately, the third optoelectronic sub-module is electrically connected to the fifth vehicle-mounted device, and the fourth optoelectronic sub-module is electrically connected to the sixth vehicle-mounted device;
the first optical coupling splitter is configured to receive the first optical signal, decompose the first optical signal into the second optical signal, the third optical signal, and a fourth optical signal, send the second optical signal to the first optoelectronic sub-module, send the third optical signal to the second optoelectronic sub-module, and send the fourth optical signal to the second optical coupling splitter;
the second optical coupling splitter is configured to decompose the fourth optical signal into a fifth optical signal and a sixth optical signal, send the fifth optical signal to the third optoelectronic sub-module, and send the sixth optical signal to the fourth optoelectronic sub-module;
the third optoelectronic sub-module is configured to perform optoelectronic conversion and protocol conversion on the fifth optical signal to obtain the second electrical signal, and send the second electrical signal to the fifth vehicle-mounted device; and
the fourth optoelectronic sub-module is configured to perform optoelectronic conversion and protocol conversion on the sixth optical signal to obtain the second electrical signal, and send the second electrical signal to the sixth vehicle-mounted device.

20. The vehicle-mounted communication system according to claim 19, wherein the vehicle-mounted system further comprises a fifth optical path and a sixth optical path, and each of the fifth optical path and the sixth optical path is connected to the first optical coupling splitter and the second optical coupling splitter; and
the first optical coupling splitter transmits the fourth optical signal through at least one of the fifth optical path or the sixth optical path.

21. The vehicle-mounted communication system according to claim 20, wherein when the fifth optical path fails, the first optical coupling splitter transmits the fourth optical signal through the sixth optical path.

22. The vehicle-mounted communication system according to claim 21, wherein the vehicle-mounted communication system further comprises a third optical switch (153) disposed on the sixth optical path;
the third optical switch is configured to turn on when the fifth optical path fails, so that the first optical coupling splitter transmits the fourth optical signal through the sixth optical path; and
the third optical switch is configured to turn off when the fifth optical path is conductive, so that the first optical coupling splitter transmits the fourth optical signal through the fifth optical path.

23. The vehicle-mounted communication system according to claim 19, wherein the vehicle-mounted communication system further comprises a third optical path and a seventh optical path, the third optical path is connected to the first optoelectronic module and the first optical coupling splitter, and the seventh optical path is connected to the first optoelectronic module and the second optical coupling splitter; and
the first optoelectronic module transmits the first optical signal through at least one of the third optical path or the seventh optical path.

24. The vehicle-mounted communication system according to claim 23, wherein when the third optical path fails, the first optoelectronic module transmits the first optical signal through the seventh optical path.

25. The vehicle-mounted communication system according to claim 23, wherein the vehicle-mounted communication system further comprises a fourth optical switch (154) disposed on the seventh optical path;
the fourth optical switch is configured to turn on when the third optical path fails, so that the first optoelectronic module transmits the first optical signal through the seventh optical path; and
the fourth optical switch is further configured to turn off when the third optical path is conductive, so that the first optoelectronic module transmits the first optical signal through the third optical path.

26. A vehicle, wherein the vehicle is equipped with the vehicle-mounted communication system (10) according to any one of claims 1 to 25.
